**Europäisches Patentamt**

**European Patent Office**

**Office européen des brevets**

(19)

(11) Numéro de publication : **0 143 728**
**B1**

(12)

# FASCICULE DE BREVET EUROPÉEN

(45) Date de publication du fascicule du brevet :
**05.04.89**

(21) Numéro de dépôt : **84430032.7**

(22) Date de dépôt : **17.09.84**

(51) Int. Cl.⁴ : **F 01 K 15/04**, F 01 K 11/04,
**B 63 G 8/12**

---

(54) **Moteur thermique à vapeur pour engin submersible autonome, sans communication avec la surface.**

---

(30) Priorité : **15.09.83 FR 8315473**

(43) Date de publication de la demande :
**05.06.85 Bulletin 85/23**

(45) Mention de la délivrance du brevet :
**05.04.89 Bulletin 89/14**

(84) Etats contractants désignés :
**AT BE CH DE FR GB IT LI LU NL SE**

(56) Documents cités :
**FR--A-- 2 118 343**
**US--A-- 2 525 804**
**US--A-- 3 559 402**
**US--A-- 3 769 796**
**US--A-- 3 775 976**
**US--A-- 3 950 950**

(73) Titulaire : **Bech, Jean**
**391 rue d'Endoume**
**F-13007 Marseille (FR)**

(72) Inventeur : **Bech, Jean**
**391 rue d'Endoume**
**F-13007 Marseille (FR)**

(74) Mandataire : **Moretti, René et al**
**C/O Cabinet BEAU DE LOMENIE 14, rue Raphael**
**F-13008 Marseille (FR)**

EP 0 143 728 B1

Jouve, 18, rue St-Denis, 75001 Paris, France

## Description

La présente invention concerne un moyen de production d'énergie mécanique d'origine thermique adapté aux conditions d'utilisation sous-marines.

En dehors des sous-marins atomiques, le moyen utilisé est le moteur électrique alimenté par accumulateurs rechargés en surface par une génératrice mue par moteur diesel.

Pour utiliser ce moteur diesel en plongée, le sous-marin doit être relié en permanence avec l'atmosphère à la surface par deux tubes distincts lui assurant :

L'alimentation en air comburant

L'évacuation des gaz brulés et de la chaleur restituée.

Exemple : Le « Schnorkel » utilisé en immersion périscopique par les sous-marins militaires. Mais, en raison de sa fragilité et des pertes de charge rapidement croissantes, cette double liaison avec la surface ne peut pas dépasser une certaine longueur qui limite la profondeur d'utilisation. Cette servitude est pire lorsque la liaison s'effectue à partir d'une plateforme flottante, car la liberté de mouvement horizontal de l'engin dépend de la mobilité de ce flotteur en surface. Donc, à moins d'employer une pile atomique ou a combustible : pour acquérir à la fois l'indépendance de la surface et une mobilité totale dans les 3 dimensions, l'engin sous-marin doit avoir des réserves de combustible et d'oxygène comburant, et être équipé :

soit d'un moteur à combustion-interne (diesel) dérivé d'un modèle courant, doté d'un système de recyclage des gaz d'échappement assurant son fonctionnement en circuit-fermé,

soit d'un autre genre de moteur thermique ne produisant que les résidus d'une combustion complète en présence d'oxygène, et de composition telle que leur élimination est aisée. Exemple : le moteur stirling à combustion-externe et hélium caloporteur.

Le but recherché est de concurrencer le diesel à recyclage et le moteur stirling avec un engin fiable de rendement global comparable, de construction plus simple et ne produisant que des résidus relativement faciles à éliminer ou à stocker :

Il s'agit donc d'une machine à vapeur à combustion externe et continue obtenue par un ou plusieurs bruleurs réalisant en permanence le mélange combustible/oxygène en proportion stoechiométrique. L'oxygène étant ici toujours parfaitement contrôlé (et jamais à l'état libre en milieu hydrocarburé comme c'est le cas en diesel), le risque d'explosion, toujours à craindre avec ce gaz, est faible.

Pour obtenir le bon rendement escompté le cycle est celui, dérivé du cycle de rankine, à vapeur surchauffée de hirn amélioré par soutirage de vapeur en cours de détente:

Le fluide choisi est l'eau, qui a beaucoup d'avantages :

caractéristiques thermodynamiques bien connues

faible coût, disponible, non-toxique, stable à haute température, ... mais elle a aussi deux inconvénients sérieux :

gel à craindre, lors des arrêts à la surface en mers froides, sans possibilité d'utiliser des antigels, aucun ne supportant les hautes températures dans la chaudière.

Nécessité, pour obtenir un rendement de cycle valable de fonctionner à température élevée (vers 480 °C), donc avec tous les risques des hautes pressions. Ce risque est ici réduit par la faible capacité d'eau de la chaudière, d'ailleurs nécessaire pour obtenir un démarrage rapide, comparable à celui du diesel, et pour répondre dans le moindre délai aux variations de charge.

L'invention comprend donc :

1) Pour pouvoir fonctionner dans un engin sous-marin sans communication avec la surface, selon le but de l'invention :

Le brevet US-A-3 775 976 de karig : mentionne les procédés Rankine fonctionnant dans un milieu sous-marin et le stockage du $H_2O$ et $CO_2$ produits et décrit un procédé de captation et stockage du CO2 par sublimation cryogénique met en œuvre de l'oxygène liquide en réservoirs spéciaux placés nécessairement dans la coque épaisse du sous-marin où la place disponible est très limitée : en effet, leur enveloppe extérieure mince avec serpentins et nombreux piquages de tuyautages, ainsi que l'indispensable calorifuge pour très basses températures (— 280 °F = — 173 °C), nécessairement constitué d'une épaisse couche d'un matériau cellulaire, sont surement inaptes à supporter la pression des grandes profondeurs sous-marines. Or, placés à l'intérieur, par leur encombrement et leur potentiel d'absorption de chaleur en cas de détérioration de l'isolation thermique, ils peuvent être un sérieux inconvénient sinon un danger. Au contraire, la présente invention permet l'emploi d'oxygène comprimé en bouteilles à 120 bar du commerce et qui recoivent ensuite le CO2 capté et liquéfié :

Le brevet US-A-3 950 950 de Doerner se réfère à une machine thermique à un générateur de vapeur et un condensateur qui sont tous deux rotatifs, le refroidissement du condenseur venant de la rotation de ses surfaces d'échange dans l'air atmosphérique comburant aspiré. Il est donc évident que cette machine ne peut pas convenir telle que décrite pour l'application sous-marine visée, faute d'air atmosphérique (le comburant étant de l'oxygène) et étant dépourvue de moyens de captation du CO2 et de l'eau produite. Car, si le générateur de vapeur est rotatif comme celui à vaporisation instantanée de la présente invention, la similitude s'arrête là : en effet, Doerner utilise un élément mono-tube en serpentin, alors qu'ici des éléments tubulaires rectilignes sont disposés radialement et parallèlement à l'axe de rotation, cette dernière disposition avec applatissement visant à la centrifugation des gaz afin de capter séparément les produits de combustion.

Etat correspondant de la technique : aucun moteur à combustion externe avec générateur de vapeur rotatif à vaporisation instantanée n'a été réalisé industriellement. Le motif essentiel pour lequel un tel système est envisagé pour un sous-marin est qu'il est inexplosible, compact, favorable pour utiliser un bruleur à oxygène et séparer les produits de combustion afin de n'en laisser sortir que le $CO_2$ et l'eau. Ses concurrents actuels sont le diesel à recyclage et le moteur Stirling, tous deux alternatifs à pistons, bielles et manivelles : l'invention évite cette conversion du mouvement alternatif en rotatif lorsque la réalisation est sous la forme d'un turbo-moteur monobloc. Or, le besoin d'un sous-marin civil de travail par grande profondeur, habité ou non, est d'énergie électrique sous forme de courant alternatif triphasé pour des moteurs à champ tournant à rotor noyé extérieurs supportant la pression des grands fonds : moteurs de propulsion, de positionnement transversal, vertical et outils divers. Il faut aussi un très puissant éclairage extérieur, alimenter caméras de télévision, appareils de contrôle, mesures et etc. Un turbo-alternateur est donc préférable à un groupe à pistons.

Description brève des figures :

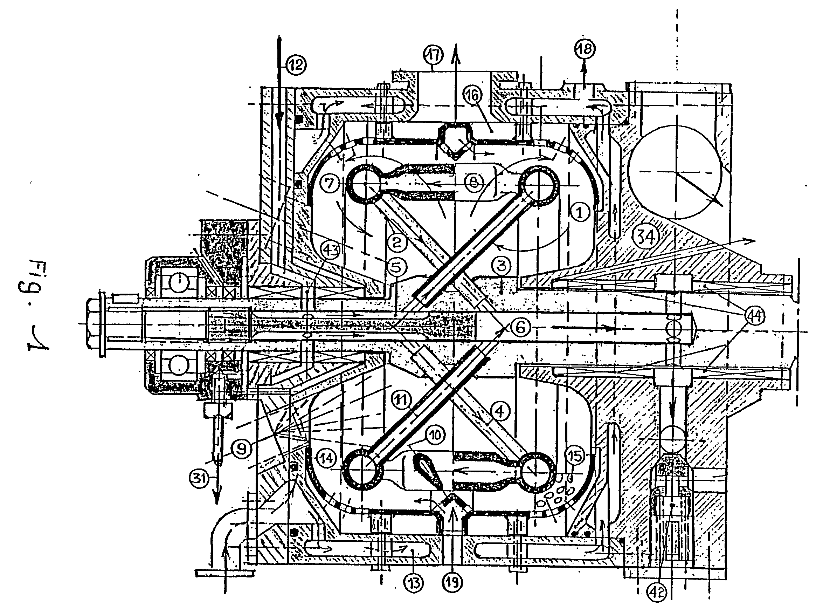

PL 1/9 — Fig. 1 = ensemble du générateur de vapeur : implantation des tubes radiaux dans l'arbre tournant, des jantes toriques creuses et tubes axiaux applatis impulseurs de gaz, enveloppe interne réflectrice, enveloppe externe et flancs refroidis.

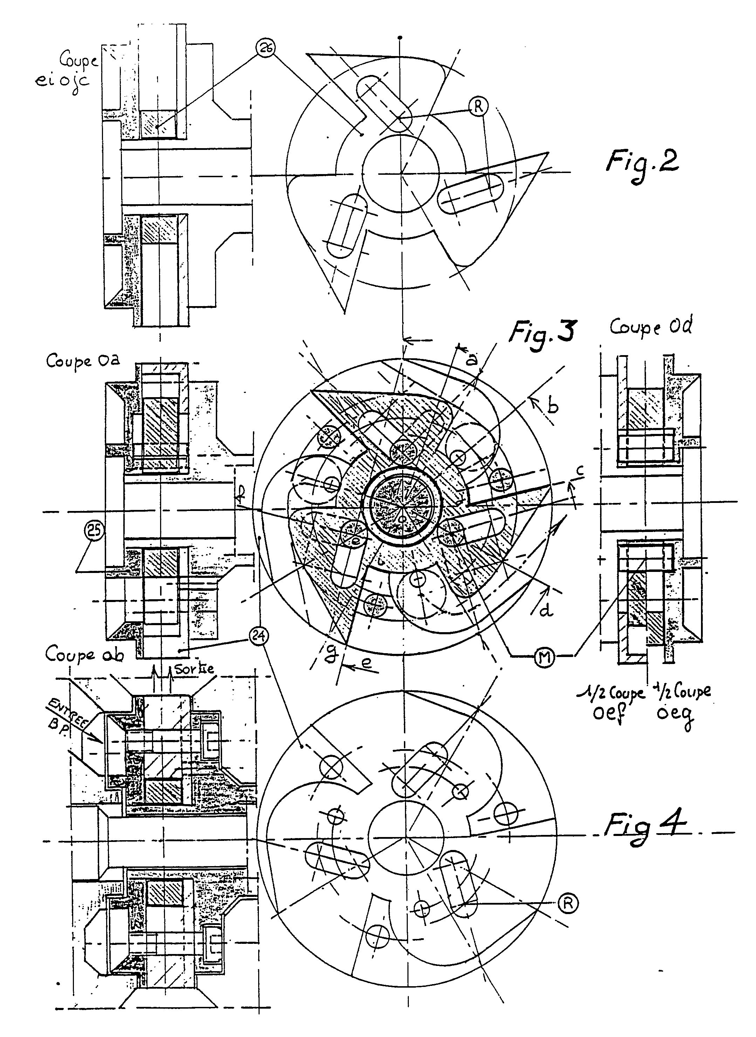

PL 2/9 — roue mono-étage de turbine basse-pression : Fig. 2 = manchon à « ailes usinées » (profil intérieur des tuyères à géométrie variable); Fig. 3 : manchon à « ailes » et disque « fraisé » assemblés, en position d'ouverture maximum des 3 tuyères, montrant l'action de fermeture des masses M soumises à la Force centrifuge dans leur rainures, Fig. 4 : disque « fraisé » et disque « couvercle » solidaires de l'arbre (profil extérieur des tuyères). Coupe axiale de turbine mono-étage basse-pression.

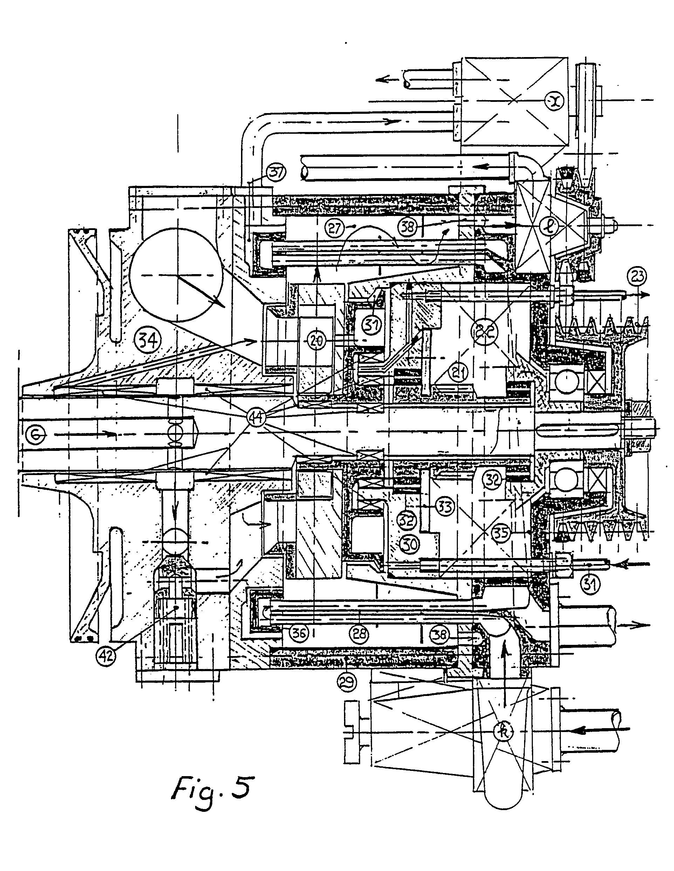

PL 3/9 — Fig. 5 = ensemble corps de turbine BP mono-roue, arbres primaire et secondaire, condenseur, réducteur, circuits d'eau, extractions eau-air, étanchéités.

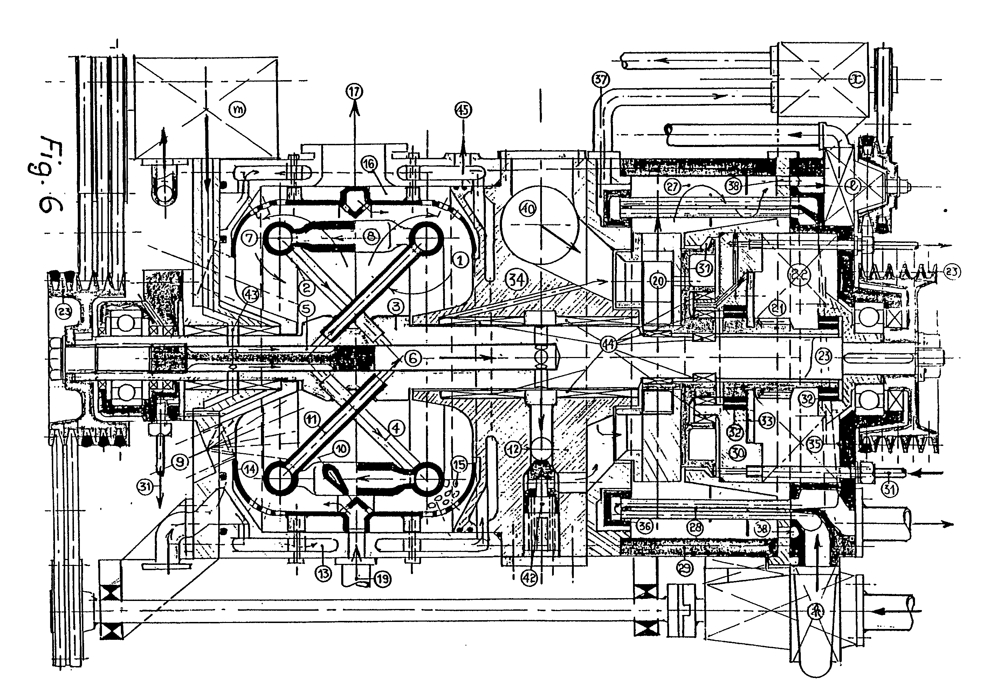

PL 4/9 — Fig. 6 = ensemble complet : turbo-générateur de vapeur avec condenseur incorporé.

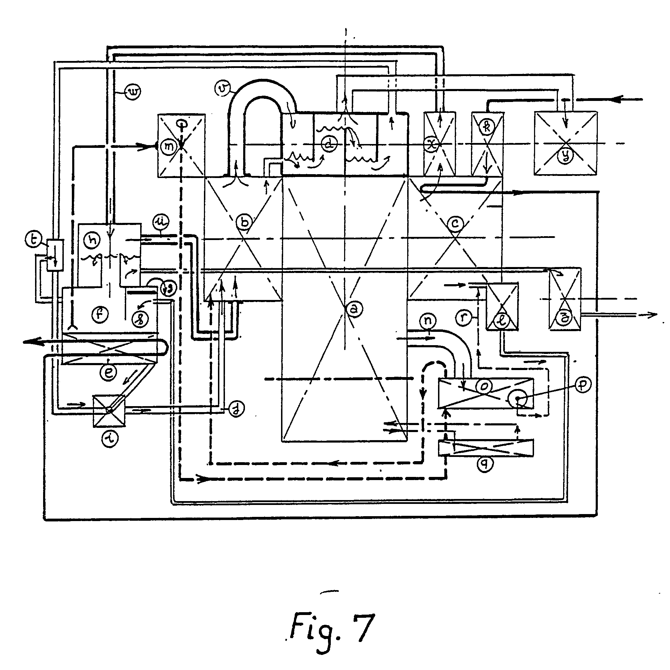

PL 5/9 — Fig. 7 = schéma simplifié des circuits (légende page 35).

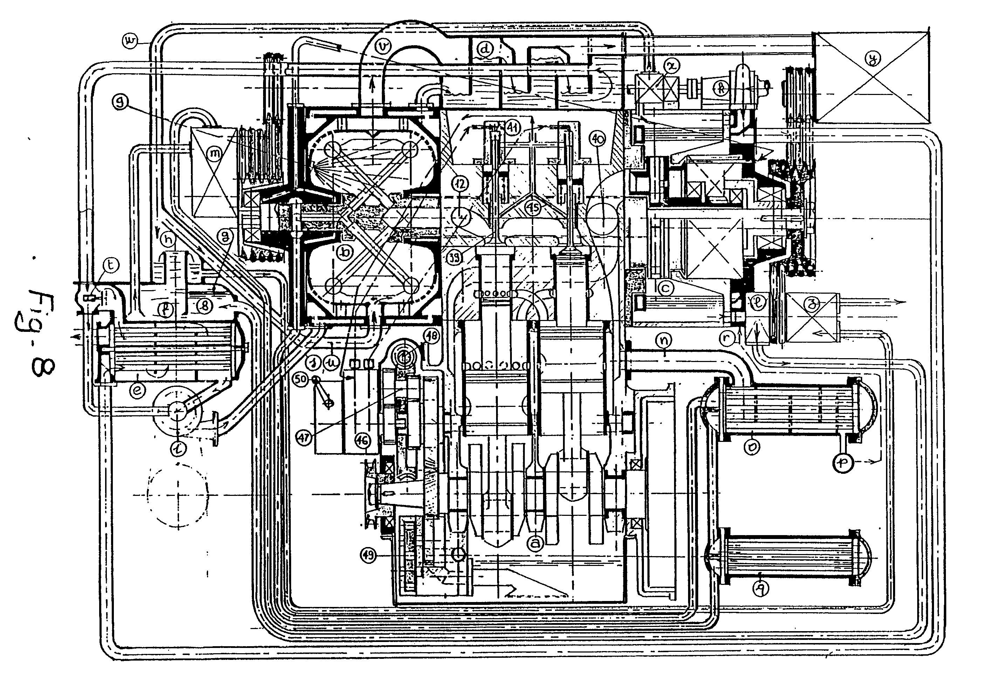

PL 6/9 — Fig. 8 = disposition générale avec moteur-détendeur « volumétrique » à pistons, bicylindre à simple-effet à double expansion et turbine BP en fin de détente.

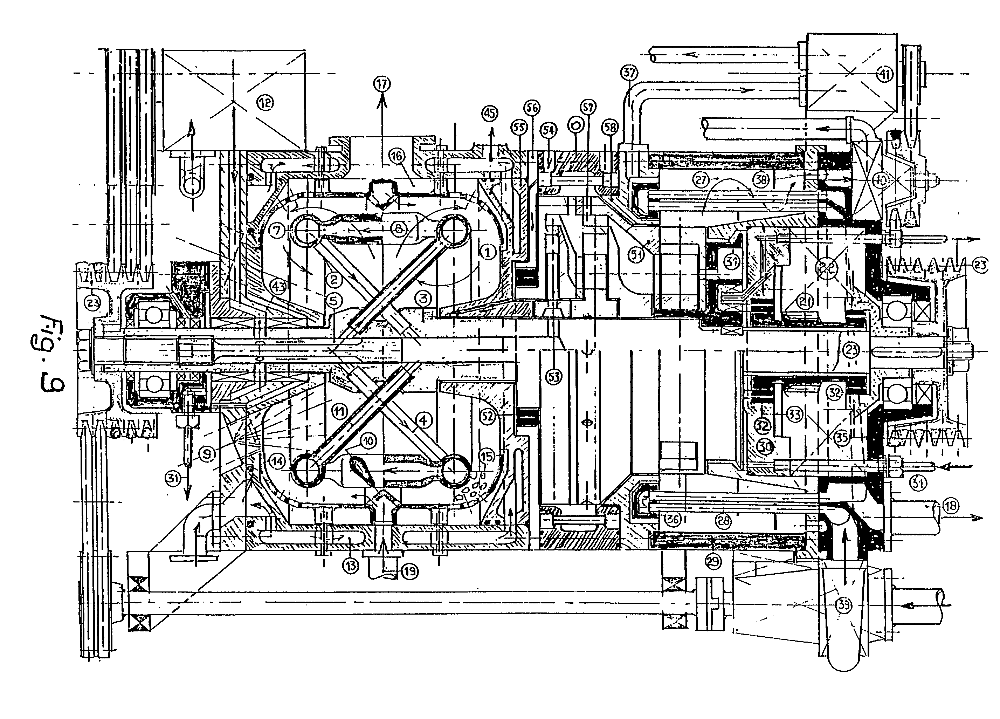

PL 7/9 — Fig. 9 = disposition générale du turbo-moteur mono-bloc.

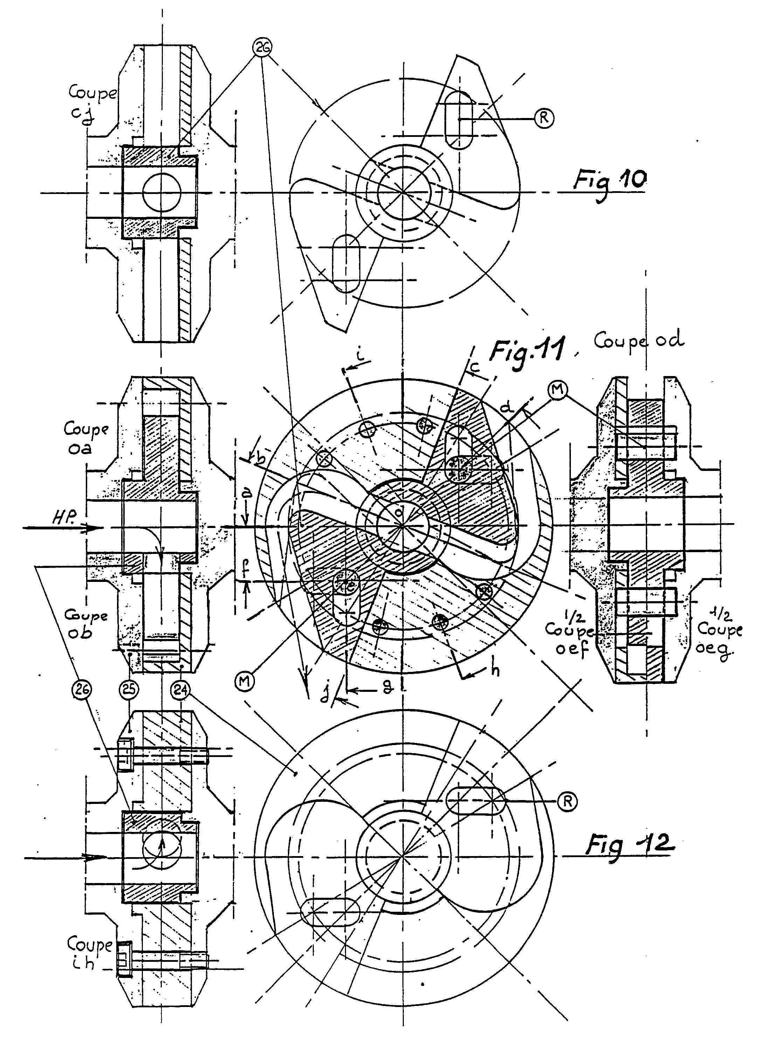

PL 8/9 — Fig. 10, 11 & 12 : roue de turbine HP à 2 tuyères alimentées par l'axe.

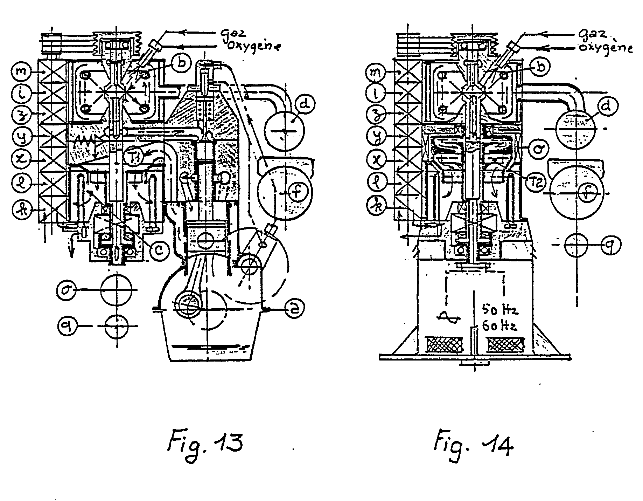

PL 9/9 pour l'abrégé = Fig. 13 : turbo-générateur avec moteur détendeur « volumétrique » (alternatif à pistons), fig. 14 : turbo-moteur mono-bloc (turbo alternateur vertical).

Un procédé de combustion avec de l'oxygène permettant le captage, le rejet ou éventuellement le stockage des produits de cette combustion avec définition des combustibles utilisables.

2) Pour alimenter un moteur à vapeur alternatif inclus dans l'invention, produisant l'énergie mécanique :

un turbo-générateur de vapeur avec condenseur incorporé et auxiliaires mettant en œuvre ces procédés de captage avec rejet ou stockage des résidus.

3) Le développement de ce turbo-générateur de vapeur avec condenseur incorporé et auxiliaires, pour la réalisation d'un turbo-moteur mono-bloc, utilisable en des applications quelconques et, plus particulièrement comme turbo-alternateur dans l'application sous-marine visée par l'invention.

1) Procédé de combustion, captage, rejet ou stockage des résidus : la plus-part des gaz-combustibles sont composés de carbone et d'hydrogène : s'ils sont exempts d'impuretés ou d'additifs, ils ne produisent en brulant avec de l'oxygène, que du CO, du $CO_2$ et de l'eau alors qu'en diesel, la combustion à haute température du carbone donne du CO.

Dans une chaudière avec bruleur fonctionnant en continu, le comburant étant de l'oxygène parfaitement dosé et mélangé, on peut obtenir directement la combustion complète du gaz donnant de l'anhydride-carbonique $CO_2$ et de l'eau. Si, dans certaines conditions la combustion complète n'est pas réalisée, du CO peut se trouver parmis les produits de combustion : l'invention assure la transformation de ce CO éventuel en $CO_2$.

Les combustibles préconisés sont le propane, butane ou mélange approximativement équivalent. Une recirculation continue des gaz est organisée dans la chaudière, qui, tout en optimisant les échanges de chaleur, assure la combustion du CO éventuellement formé à haute température afin de n'avoir que $CO_2$ et eau. Par kg de propane, butane ou mélange équivalent, il faut :

2,5 à 2,6 kg d'oxygène pour le bruler en donnant du CO

3,5 à 3,6 kg d'oxygène pour combustion complète donnant du $CO_2$

la quantité d'eau produite est approximativement le même quel que soit le gaz ou le genre de combustion, soit 1,5 à 1,6 kg.

L'hydrogène pur serait donc préférable, ne produisant que de l'eau ($H_2 + O = H_2O$). Mais étant difficilement liquéfiable, il n'est stockable que comprimé sous haute-pression (150 bar) : très inflammable avec une très faible densité qui favorise les fuites, il est trop dangereux pour cette application. Rejet ou stockage de l'eau : à raison de 1,5 à 1,6 Kg produit pour 1 Kg de gaz-combustible consommé, l'eau accumulée devient vite encombrante : sauf si elle est considérée comme précieuse ou s'il est souhaitable de conserver ce poids à bord, (de même que pour le CO2) une pompe spéciale est entraînée comme les autres auxiliaires par le turbo-générateur de vapeur la refoule à l'extérieur (100 bar pour 1000 m de fond).

Transformation du CO éventuel en CO2 : (voir PL. 1/9).

Le foyer de la chaudière est conçu pour en bruler le plus possible, l'oxygène nécessaire pour le transformer en CO2 étant disponible puisque injecté au bruleur stœchiométriquement.

En présence de la vapeur d'eau formée par la combustion du gaz et vers 350 ºC, il est possible de transformer du CO en CO2 en donnant de l'hydrogène ($CO + H_2O = CO_2 + H_2$) : la re-circulation continue organisée dans la chambre de combustion (1) dont l'enveloppe (13) est refroidie et favorise cette réduction du CO restant par la vapeur d'eau. L'hydrogène ainsi produit étant brulé avec l'oxygène présent, la transformation complète du CO en CO2 est réalisée après un certain nombre de re-circulation.

Captage, rejet ou stockage du CO2 : la chaudière a une chambre de combustion fermée en tôle d'acier épaisse (14) suspendue, avec un certain intervalle dans la double-enveloppe extérieure (13) refroidie afin de limiter les températures et éviter les déperditions extérieures. Mais, l'échange de chaleur avec l'enveloppe est aussi réduit que possible afin d'éviter de rejeter en pure perte de la chaleur au système de refroidissement : par un dimensionnement adéquat et une judicieuse répartition des points de suspension, le drainage de la chaleur provenant des parois de cette chambre est organisé de manière à régler la température de certaines régions, soit 350 ºC pour la réduction du CO éventuel par la vapeur d'eau.

Après avoir abandonné la plus grande part de leur chaleur en plusieurs re-circulations autour des surfaces de chauffe, les gaz de combustion sont collectés dans l'espace (16) compris entre la chambre et l'enveloppe-refroidie, grâce à des fentes et perforations (15) pratiquées dans des zones favorables à cette captation. De là, ils sont évacués par le conduit (17) vers un « pot à barbotage » (d, PL. 5/9) dont la charge d'eau règle la pression dans la chambre de combustion. Ce barbotage dans l'eau de refroidissement sortant de l'enveloppe de la chaudière assure la récupération de la chaleur résiduelle des gaz et surtout, la condensation de la vapeur d'eau qu'ils contiennent : Ainsi, l'eau produite par la combustion vient en appoint continu dans le « circuit monohydrique » de la machine à vapeur. La majeure partie du CO2 refroidi lors du passage dans l'eau se dégage dans la chambre de séparation-captage du pot à barbotage d'ou il est aspiré par le compresseur de CO2 (y). Celui qui est dissous dans l'eau est libéré dans la chaudière lors de la vaporisation et se retrouve, finalement, dans le condenseur en fin de cycle.

Les conditions du condenseur n'étant pas favorables à une redissolution dans l'eau condensée (basse-température, très faible pression) ce CO2 est aspiré par la « pompe-à-air » (x) qui y maintient le vide et renvoyé à « l'atmosphère » de la bache alimentaire (h). De là, il est ré-injecté avec l'air éventuel, dans la chambre de combustion par le conduit de recyclage (u) et finalement repris par le compresseur (y) entrînés par le turbo-générateur. Si la température d'aspiration du CO2 est supérieure à sa température critique de liquéfaction (31, 5 ºC), il peut être comprimé en phase gazeuse jusqu'à la pression correspondant à l'immersion du sous-marin, et en être ainsi expulsé (100 bar à 1 000 m de fond). Outre que l'effet en surface est nuisible à la discrétion, ce travail de compression est considérable et croit rapidement avec la profondeur :

Aussi, passé 360 m ou 36 bar il peut être préférable de ne pas le comprimer davantage et de le liquéfier sous cette pression pour le conserver à bord, à la place de l'oxygène consommé, jusqu'en fin de mission : en effet, si l'oxygène est stocké comprimé dans des bouteilles du commerce à 120 bar, il est concevable d'y emmagasiner à sa place sous 36 bar lorsqu'elles sont vides, une quantité de CO2 liquéfié qui représente en poids 83 à 85 % de l'oxygène consommé. Pour celà les têtes des bouteilles d'oxygène sont reliées au refoulement de CO2 liquéfié par une tubulure contrôlée par un clapet taré pour ne s'ouvrir que lorsque la pression d'oxygène est nulle. Pour être liquéfiable, le CO2 doit être refroidi en dessous de 31,5 ºC. Ce refroidissement et celui nécessaire pour le condenser après compression sont obtenus en utilisant la détente de l'oxygène et du gaz combustible qu'impose l'alimentation des bruleurs.

2) Turbo-générateur de vapeur avec condenseur incorporé : (PL. 4/9) le générateur de vapeur (PL. 1/9) est « à vaporisation instantanée ». Timbre : jusqu'à 100 bar, surchauffe limitée par les matières du surchauffeur et du moteur, vers 480 ºC. Sa chambre de combustion (1) est close, sous-pression contrôlée par la charge d'eau à travers laquelle s'échappent les gaz-brulés. Le transfert de chaleur est accéléré par une grande vitesse des gaz de combustion par rapport aux surfaces de chauffe, de manière à s'accorder avec leur faible importance : mais, comme le bruleur n'est qu'une sorte de « chalumeau oxygène/gaz » produisant un flux de chaleur relativement concentré, la mise en mouvement des surfaces de chauffe par rapport à la flamme est préférée.

Il s'agit donc d'une chaudière rotative, constituée d'une roue (2) à rayons portée par un arbre (3), tournant à une vitesse convenant au régime de production de vapeur. Les rayons (4) sont des tubes épais disposés symétriquement en deux nappes coniques formant entre-elles un angle de 90º. Ils sont implantés dans le moyeu de la roue à partir de deux canaux distincts affectés :

l'un à l'arrivée d'eau à vaporiser, (5)

l'autre à la collecte de la vapeur produite. (6)

A l'autre extrémité, les tubes de chaque nappe débouchent dans une jante torique creuse (7) qui les met en communication. Ces 2 jantes portent une 3ème nappe de tubes périphériques (8) disposés selon la génératrice d'un cylindre.

Les tubes de la nappe conique la plus éloignée de la flamme du bruleur (9), parcourus du moyeu vers la 1ère jante par l'eau à vaporiser, sont les tubes réchauffeurs (4),

ceux de la nappe périphérique cylindrique sont les tubes vaporisateurs (8). La circulation s'y fait depuis la jante collectrice d'eau réchauffée vers la jante de vaporisation.

Ces tubes vaporisateurs sont d'un échantillonnage identique aux autres, mais sont applatis dans la partie comprise entre les jantes : ce formage légèrement curviligne en profil d'aile, a pour but, tout en laissant un passage intérieur suffisant, de réduire le volume d'eau et surtout d'en faire des impulseurs de gaz grâce à une orientation conforme au triangle des vitesses de l'aubage ainsi formé (10).

Ceux de la 2ème nappe conique, parcourus depuis la jante de vaporisation vers le moyeu, sont les tubes surchauffeurs (11), qui, si besoin est, peuvent aussi être applatis et orientés pour servir d'impulseurs de gaz. La nappe des tubes réchauffeurs travaillant exactement comme le rotor d'une pompe centrifuge, constitue la pompe de circulation forcée de la chaudière : si le timbre de la chaudière est modéré, selon le diamètre de la roue et la vitesse de rotation, elle peut produire tout le travail nécessaire pour injecter l'eau dans la chaudière, dispensant ainsi de pompe alimentaire. Sinon, une pompe de haute pression (m) à engrenages ou à pistons entraînée par l'arbre de la roue de chauffe est nécessaire : son débit-nominal correspond à la production de vapeur à pleine puissance. Aux autres allures le débit est proportionnel au régime de rotation de l'arbre et ajusté par une soupape de décharge régulée. Les 2 jantes sont dotées d'une paroi de forte épaisseur, capable d'accumuler à la fois de l'énergie thermique et de l'énergie cinétique, toutes deux utiles dans les régimes transitoires. Cette particularité s'inspire des générateurs à vaporisation instantanée brevetés en 1887 par M. Serpollet, caractérisés par un très faible volume d'eau et de fortes épaisseurs de métal : n'ayant pratiquement ni réserve d'eau ni de vapeur, ce genre de chaudière est inexplosible.

Ici, cependant, l'enveloppe (13) de la chaudière (PL. 1/9) est à double-paroi contenant une quantité d'eau relativement importante : mais cette capacité est soustraite à la pression et tout à fait distincte du générateur de vapeur proprement dit. Elle est donc sans danger, jouant uniquement le rôle d'écran et de récupérateur de chaleur. Fixée contre cette enveloppe refroidie mais avec un certain espacement se trouve une paroi en tôle épaisse (14) localement perforée qui délimite la chambre de combustion, en forme de double tore, concentrique à la roue : les gaz chauds ne sont donc pas directement en contact avec la paroi-froide, toute transmission inutile de chaleur pouvant constituer une perte étant évitée. Des perforations et fentes (15) judicieusement réparties permettent la sortie des produits de la combustion complète dans l'espace (16) ménagé contre la paroi-froide, d'où ils sont évacués selon le processus précédemment décrit. Ainsi, deux espaces annulaires de section quasi-circulaire et dont chacune des 2 jantes occupe approximativement le centre, sont ménagés entre la périphérie de la chambre de combustion et le moyeu. Cette disposition est voulue pour organiser une re-circulation radiale continue des gaz de combustion : un brassage s'enroulant autour des 2 jantes est entretenu par le flux de bruleur (9) combiné avec l'effet de ventilation centrifuge du à la rotation des aubages constitués par les tubes vaporisateurs (8) et, si applatis et orientés, par les surchauffeurs. Grâce à cette re-circulation continue, les gaz-brulés repassent périodiquement sur les surfaces de chauffe en y abandonnant leur chaleur et le CO éventuellement présent a des chances de trouver l'oxygène qui admis stœchiométriquement pour le bruler en donnant du $CO_2$. En outre, le $CO_2$ est presque 2 fois plus dense que le CO tandis que ce dernier a une densité plus élevée mais assez voisine de celle de la vapeur d'eau.

L'effet centrifuge résultant de ces rotations a donc tendance à créer la stratification suivante :

En contact avec la paroi périphérique (14) : le $CO_2$.

Vers les jantes (7) : le CO et la vapeur d'eau.

Ces conditions sont favorables à la sortie du $CO_2$ travers les perforations (15) de la paroi (localisées dans la région la plus excentrée et la plus froide) et surtout à la réaction de réduction du CO restant par la vapeur d'eau : pour cela les régions non perforées de l'écran (14) en tôle épaisse ou la vitesse est moindre sont maintenues vers 350 °C, valeur favorable à cette réaction.

Après avoir franchi les perforations, le $CO_2$ et la vapeur d'eau restante sont collectés et canalisés par le conduit (17) vers un « pot d'échappement à barbotage » (d, PL. 5/9 et 6/9) utilisant l'eau (18) sortant de l'enveloppe (13) de la chaudière. Ce pot est inclus dans le circuit de refroidissement de la chaudière contrôlé par thermostat (t) et animé par la pompe (i) à partir de la bache alimentaire (f). Celle-ci est constituée par la chambre à eau douce (e) et le vase d'expansion (f) de large capacité d'un réfrigérant eau-douce/eau de mer de moteur diesel-marin, doté de son circuit « by-pass » thermostaté. Le faisceau tubulaire de cet échangeur est parcouru par l'eau de refroidissement sortant du condenseur (c) : cette eau évacue s'il y a lieu la chaleur excédentaire prélevée à la chaudière. Le vase d'expansion (f) est surmonté d'une caisse (h) collectant le débordement d'eau continu résultant de l'apport de la combustion condensé dans le pot (d) : cette eau en excès est reprise par la pompe (z) prévue pour le rejet ou le stockage de l'eau produite. La caisse (h) assure aussi le transit de l'air et du $CO_2$ refoulés par la pompe à vide (x) et recyclés par la tubulure (u). Le vase (f) est doté d'un séparateur d'huile (s) avec extraction permanente (g). Mise en rotation de l'arbre porteur de la roue-de-chauffe : PL. IV. Les moteurs à pistons réalisent

mal l'ultime détente sous vide nécessaire pour avoir un bon rendement de cycle : en dessous d'une certaine puissance il y a « détente excessive » pouvant causer des chocs hydrauliques en fin de course des pistons B. P. C'est pourquoi le nombre d'expansions du moteur alternatif est limité à 2, la détente s'achevant dans une turbine (20).

N'ayant plus à craindre ces condensations dans les cylindres, cette 3ème détente peut-être beaucoup plus poussée ainsi que l'autorisent les turbines, avec un vide accru au condenseur apportant un nouveau gain en rendement de cycle. Mais il n'est pas concevable de l'accoupler avec le moteur en raison de son régime de rotation élevé : le mieux est de lui faire entraîner tous les auxiliaires, dont la roue-de-chauffe : mais la fraction restante de la chute de chaleur étant importante, la puissance recueillie sur la turbine est excédentaire. Le prélèvement de vapeur ou « soutirage » (n, PL. 5/9) pratiqué à la fin de la 2ème expansion est bien venu pour la limiter. Mais la vitesse de rotation atteinte par l'arbre primaire (21) portant la turbine du type « à réaction pure » reste très élevée : environ 40 000 T/min. Or la vitesse périphérique de la roue de chauffe ne doit pas dépasser le domaine sub-sonique (envi. 210 m.s ou 8 000 T/min pour 0,5 m de diamètre) : un réducteur de vitesse (22) est donc nécessaire pour mettre en rotation un arbre secondaire avec prises de force (23) entraînant tous les auxiliaires et assurer à vitesse convenable, la rotation de la roue de chauffe.

Cette turbine B. P. (PL. 2/9) est dotée de tuyères à géométrie variable et d'un régulateur de vitesse intégré pour s'adapter à tous les régimes de marche et éviter les emballements : la réalisation consiste en deux disques (24) & (25) solidaires de l'arbre, montés face à face, emprisonnant un manchon (26) libre en rotation selon un arc limité et portant des « ailes » usinées : le disque (24) porte fraisé dans la masse le profil extérieur des tuyères de détente (aussi nombreuses que voulu ou possible et au minimum deux). Les « ailes » du manchon (26) portent le profil intérieur. La rotation de l'un par rapport à l'autre a pour effet de rapprocher ou d'éloigner ces 2 profils contenus entre les 2 faces parallèles des disques. La tuyère à section de passage rectangulaire ainsi formée se trouve donc modifiée en forme et section, les 2 positions extrèmes étant :

Position fermée : section-col mini, profil convergent

Position ouverte : section-col maxi, profil convergent-divergent

Cette adaptation de la tuyère au conditions de détente du moment est auto-ajustée en permanence par un régulateur centrifuge dont les masses sont des rouleaux cylindriques (M) et le ressort la vapeur elle-même : les disques (24) & (25) portent des rainures (R) de coulissement recevant les extrémités des rouleaux, orientées à 45° du rayon selon lequel les sollicite la force-centrifuge. Le manchon (26) est lui fraisé de « boutonnières » de profil (R) identique également orientées à 45°, mais de l'autre côté du rayon : ainsi la force centrifuge tend à fermer les Tuyères alors que la pression de la vapeur tend à les ouvrir et à forcer le passage exerçant l'effort antagoniste à celui des rouleaux (M) jusqu'à l'équilibre. Le choix des masses est en rapport avec la plage de pression-amont à laquelle est soumise la turbine et la vitesse maximum de rotation souhaitée, le système pouvant être : soit un simple limiteur de survitesse, soit un adaptateur du profil optimum aux conditions momentanées de détente.

Les caractéristiques sont fixées par les masses, rayons et courses, ajustage par mise au poids des rouleaux (perçage axial). Condenseur (PL. 3/9) : il contient la turbine à laquelle il sert d'enveloppe. Aussi, il est circulaire ainsi que son faisceau tubulaire de refroidissement par surface (28) en forme de « double cage d'écureuil » : les tubes, relativement courts mais nombreux, sont disposés en 2 ou plusieurs rangées périphériques et en quinconces. Le diamètre intérieur de cette « cage » est celui de la roue de turbine augmenté d'un « entre-fer » suffisant. A l'extérieur de la « cage » après un certain espace radial, se trouve l'enveloppe (29) délimitant l'enceinte (27) du condenseur : la plaque de tête de ce faisceau sert de fond côté « réducteur », complété par un disque (30) portant l'un des paliers (32) et les dispositifs d'étanchéité (44) à l'huile et à la vapeur. l'arbre (21) porte la turbine (20) à l'aide d'un disque (31) formant tambour d'équilibrage de poussée-axiale, doté d'un joint hydraulique d'étanchéité au vide par effet centrifuge sur de l'eau provenant de la fuite permanente à la boîte d'alimentation de la chaudière acheminée par le conduit (31). Les arbres sont coaxiaux mais sans aucun contact entre-eux : L'arbre primaire (21) à l'extérieur, tournant à 40.000 T/min, est porté par 2 paliers (32) à double-bague lubrifiés par l'huile selon la technique des turbo-soufflantes modernes et maintenu en position par un disque de butée (33) s'engageant dans une gorge. Le secondaire pouvant atteindre 8 000 t/min est porté à ses extrémités par 2 paliers à billes, l'un de butée, intégré au réducteur. Le fond côté « réducteur » porte une double boîte annulaire de circulation d'eau (35) : l'anneau d'entrée dessert la rangée extérieure de tubes afin qu'ils soient les plus froids. Le retour au compartiment « sortie » s'effectue par les tubes de la rangée intérieure par l'intermédiaire d'une boîte collectrice annulaire (36) portée le faisceau et le corps central (34). L'alimentation de la boîte annulaire d'entrée d'eau se fait par la pompe de circulation Ppale (k) directement fixée sur l'appareil et entraînée comme les autres auxiliaires, par les prises de force (23). La périphérie de la boîte collectrice (36) est le « point-froid » (37) ou aspire la « pompe-à-air et à vide » (x). A l'opposé, côté « réducteur » est le « puits » (38) ou aspire la « pompe d'extraction d'eau-condensée » (1) flasquée sur le fond (35). L'ensemble est construit pour supporter 95 % de vide en service. Fonctionnement du condenseur : les jets de vapeur détendue sortant des ajutages de la turbine balayent uniformément tous les tubes, étant légèrement déviés et aidés en cela par la composante centrifuge due à la rotation à grande vitesse : ainsi sont évitées les difficultés de pénétration et de masquage des surfaces froides par ruissellement rencontrées dans les condenseurs de disposition clasique, tout au moins pour la moitié inférieure du faisceau si l'axe est horizontal. De ce point de vue (ainsi que pour l'organisation du graissage du réducteur de vitesse et du fonctionnement de la « boîte étanche » qui l'en sépare, notamment pour éviter d'aspirer de l'huile), la disposition à axe vertical est de beaucoup préférable, sans être pour autant obligatoire : en ce cas, le ruissellement est uniforme le long de tous les tubes. Le « puits » (38) peut être situé au point le plus bas par positionnement du trou ménagé dans la plaque de tête du faisceau (28) débouchant dans une gorge circulaire du fond (35) où aspire la pompe d'extraction (1). Organisation du refroidissement à grande-profondeur : par sécurité, la circulation directe d'eau de mer ne peut pas être envisagée en raison des très fortes pressions susceptibles de s'exercer dans les circuits en plongée : le refroidissement est donc obligatoirement du type « Keel ou Skin-Cooling », c'est-à-dire un refroidissement indirect par des surfaces rapportées sur la coque du sous-marin ou des capacités en contact avec l'eau de mer extérieur : aussi le fluide réfrigérant pourra être de l'eau douce, notamment celle produite par la combustion si on préfère la stocker plutôt que de la refouler à la mer au prix du travail important d'une pompe à eau spéciale.

Auxiliaires du condenseur. Le condenseur est doté :

D'une pompe centrifuge de circulation (k) à grand-débit/faible hauteur de refoulement intégrée au circuit « Kell/Skin-Cooling ».

D'une pompe d'extraction du condensat (1) de débit égal à la capacité maximum de vaporisation de la chaudière, aspirant sous vide et refoulant à la pression de la bâche (s, f).

D'une pompe-à-vide (x) d'extraction d'air et $CO_2$ pouvant être un éjecteur à vapeur (éjectair).

Tous ces auxiliaires sont entraînés par l'arbre-porteur de la Roue-de-chauffe au moyen des prises de force (23) ou par un arbre tertiaire (non-figuré) incorporé à l'ensemble mécanique du réducteur de vitesse à double train épicycloidal.

Soupape de sûreté de la chaudière : une soupape de sûreté (42) est montée dans le corps central (34) en bout du conduit de vapeur H. P. alimentant le moteur : lorsqu'elle se soulage, la vapeur H. P. déchargée par cette soupape aboutit dans l'entrée de vapeur à la turbine (20), donc au condenseur : en cas de surpression accidentelle, aucune perte d'eau ni dégagement extérieur — gênant dans un sous-marin — ne sont à craindre. La turbine reçoit ainsi une impulsion tendant à augmentation du travail de tous les auxiliaires dont la pompe alimentaire : au démarrage, cette impulsion lance l'ensemble tournant dès que la pression dépasse le timbre.

Ce turbo-générateur avec condenseur incorporé est donc un groupe monobloc composé : (voir PL. 4/9).

D'un ensemble-tournant constitué par l'arbre distributeur (3) de vapeur portant la roue-de-chauffe, et, de l'autre côté, sur un arbre concentrique distinct (21), la turbine-motrice (20).

D'un corps central (34) raccordé au moteur, distribuant la vapeur HP et collectant celle d'échappement BP.

De la chaudière, fixée sur un côté du corps-central, avec, à son opposé, la boîte-étanche d'élimentation en eau (43).

Du condenseur (c, 27), fixé sur l'autre côté du corps-central.

Des dispositifs d'étanchéité (44) appropriés à la traversée par les arbres (21) & (23) des enveloppes de la chaudière, condenseur et réducteur, selon les fluides en présence et pressions.

De 2 paliers-supports extrêmes, l'un étant incorporé au réducteur de vitesse (22) avec prises de mouvement (23).

Ce groupe monobloc est prévu pour s'adapter directement sur le bloc-culasse H.P. du moteur alternatif en y boulonnant, avec interposition d'un joint adéquat, le corps central (34), les orifices (12) & (40) étant concordants sur ces deux pièces. Les PL. 4/9 et 5/9 montrent la disposition générale, simplifiée et en détail, de l'ensemble de ce moteur thermique à combustion externe, adapté pour l'application sous-marine, c'est à dire :

Utilisant d'une manière autonome le gaz butane ou propane et l'oxygène comburant emportés pour la mission.

Brulant ces gaz en ne donnant que de l'eau et du gaz carbonique, sans aucun dégagement libre à bord.

Rejetant ou stockant ces résidus par pompe de rejet d'eau et compresseur de $CO_2$ entraînés.

Le moteur à vapeur alternatif produisant l'énergie mécanique : comme toute machine thermique, ce moteur à combustion-externe comporte un organe de détente transformant l'énergie calorifique en énergie mécanique :

Ce « détendeur » est un moteur volumétrique ou une turbine.

Leurs caractéristiques étant très différentes, l'un pourra être préféré à l'autre selon l'application.

Pour l'opposer à un diesel, une machine comparable « à pistons, bielle et manivelles » doit être envisagée, notamment pour la production d'énergie-mécanique d'utilisation directe.

Mais s'il s'agit de passer par l'intermédiaire de l'énergie électrique un groupe turbo-alternateur aura l'avantage : c'est pourquoi ces deux détendeurs figurent dans l'invention.

.Concernant le moteur alternatif, l'invention consiste :

A le construire à partir d'un moteur diesel existant.

A le doter du turbo-générateur de vapeur avec condenseur et auxiliaires pour réaliser la machine thermique autonome spécialement adaptée pour cette application sous-marine.

Le cycle thermodynamique adopté est celui de Randine avec, pour obtenir un meilleur rendement, surchauffé isobare de la vapeur : ce procédé également connu sous le nom de « cycle de Hirn », est encore amélioré par « soutirage » de vapeur en cours de détente. Ainsi, ce cycle « cycle de Rankine-Hirn », impose la condensation et le recyclage du fluide travaillant :

Presque toute la chaleur résiduelle est rejetée au « condenseur » alors qu'en « diesel », elle est évacuée à l'atmosphère par les gaz d'échappement. Or, dans cette application sous-marine, le refroidissement du condenseur n'est pas un problème supplémentaire, puisque le refroidissement des gaz d'échappement du diesel à recyclage ne peut pas être évité.

La machine à vapeur alternative a les avantages suivants :

Niveau d'émission sonore nettement moindre qu'en diesel.

Souplesse et caractéristiques de couple intéressantes.

Sens de rotation directement réversible.

Entretien très réduit du moteur proprement dit, le principal concernant la chaudière et le condenseur. (En diesel, le système de recyclage de refroidissement des gaz est aussi exigeant) configuration élémentaire du moteur : (PL. 6/9).

Les cylindres sont à simple effet, mais double expansion (Compound), avec pistons à 2 diamètres et échappements « croisés » ce qui implique, au minimum, un moteur à deux cylindres identiques et un cycle à 2 temps :

Le cylindre H.P. (1ère expansion) de petit diamètre, est à la partie supérieure.

Sur le même axe et au-dessous : le cylindre B.P. (2e expansion). Le rapport des diamètres H.P./B.P. qui dépend du taux des détentes successives réalisé est de l'ordre de 0,45. Le cylindre et le piston B.P sont ceux du moteur diesel d'origine, modifiés comme suit :

cylindre : perçage d'une « couronne » de trous circulaires en zone en fin de course du piston servant de lumières d'échappement, débouchant dans l'ex-chambre à eau de refroidissement.

Piston : en aluminium, pourvu d'une gorge de segment en bas de jupe. Sa tête est ré-usinée pour recevoir concentriquement et fixé par boulonnage le piston H.P. en fonte ou acier.

Avec cette disposition, les fuites de vapeur de l'expansion H.P à la partie supérieure sont minimisées par son petit diamètre, toute fuite devant aller travailler dans le cylindre en dessous à l'étage B.P.

Le cylindre H.P. est constitué d'une chemise en fonte réalisée selon le dessin classique des chemises de moteurs :

Comme le cylindre B.P., elle est percée de lumières d'échappement dans la zone de fin de course. Cette chemise est montée dans un bloc spécialement réalisé servant de culasse au cylindre B.P et de corps au cylindre H.P. Sa liaison au bloc-cylindres se fait par les goujons ou vis de culasse du moteur diesel d'origine avec interposition des mêmes joints.

Une culasse est spécialement réalisée pour fermer le cylindre H.P à sa partie supérieure et fixée par vis ou goujons implantés dans le corps de cylindre H.P : si l'encombrement en hauteur le permet, cette culasse reçoit la soupape (39) d'injection de vapeur H.P. (soupape en tête). Sinon, elle est logée dans le corps de cylindre H.P. selon la disposition classique dite « à soupape latérale ». Le corps de cylindre H.P. comporte une chambre collectant la vapeur d'échappement de la 1ère expansion au niveau des lumières du cylindre H.P. : un conduit ménagé dans ce corps de cylindre la canalise à l'admission du cylindre B.P. voisin (échappements croisés).

Ainsi construit, ce moteur à vapeur est du type « Equi-courant », la vapeur ne repassant jamais par la même voie, évitant ainsi d'alterner chauffe et refroidissement des conduits : cette disposition réduit considérablement les pertes de chaleur par effet de paroi.

Avec un moteur à 2 (ou 4) cylindres à 180° (vilebrequin « plat ») ou à 3 cylindres à 120°, ou 5 cylindres à 72°, il n'y a pas besoin de soupape de transfert de vapeur entre l'échappement du H.P. et l'admission du B.P.

Avec un 3 cylindres, chaque cylindre H.P. échappe dans un cylindre B.P. voisin à 120° après.

En donnant aux lumières d'échappement H.P. une hauteur telle que l'avance à l'ouverture d'échappement (A.O.E.) est 60° avant le point-mort bas, l'admission au cylindre B.P. calé 120° après débute exactement à son point-mort haut (120° + 60° = 180°). Le retard à la fermeture échappement H.P. étant symétriquement égal à 60°, on évite ainsi une re-compression excessive dans le cylindre H.P. Avec un 2 ou 4 cylindres à 180° on limite la hauteur des lumières pour avoir une avance à l'ouverture d'échappement de seulement 30°, ce qui prolonge avantageusement la détente dans le cylindre H.P. : l'admission au cylindre B.P. débute donc 30° avant sont point-mort haut, ce qui est une valeur un peu élevée de l'avance pour une phase d'admission qui se prolonge d'autant au-delà de ce point-mort (R.F.A. = symétriquement : 30°). La hauteur des lumières d'échappement du cylindre B.P., commandant le point de retard à la fermeture de l'échappement B.P., conditionne la phase de re-compression de ce cylindre : on s'arrange donc pour que cette re-compression soit équivalente à la pression d'admission de manière que le transfert effectif de vapeur du H.P. au B.P. ne débute qu'au voisinage du point-mort haut du cylindre B.P., neutralisant ainsi la valeur relativement forte de l'avance à l'ouverture admission B.P. (30°).

Distribution de vapeur-soupape équilibrée, graissage intérieur : la soupape d'injection de vapeur (39) placée sur chaque cylindre H.P. doit être, en raison de la pression élevée de la vapeur (100 bar), du type « équilibré » : elle est cependant du modèle courant « à tulipe » utilisé en diesel avec tige coulissant dans un guide. La lubrification de la tige dans le guide est assurée, comme décrit plus loin, par le système de commande hydraulique d'ouverture : la fuite vers la tulipe qui en résulte à chaque ouverture assure le graissage intérieur des cylindres dans lesquels elle est véhiculée par la vapeur surchauffée.

Le jeu de coulissement ne pouvant donc pas être utilisé pour laisser un passage à la vapeur, un canal latéral de très faible section est percé depuis le conduit de vapeur pour déboucher dans une chambre cylindrique contenant le ressort de rappel et sa coupelle classiquement clavetée sur la tige. Mais la coupelle est ici un piston coulissant dans cette chambre cylindrique avec faible jeu et gorges de détente, assurant l'étanchéité, donc l'établissement de la pression de vapeur sous le piston : avec un piston de surface égale à celle de la tulipe de la soupape fermée, l'un et l'autre étant soumis à la même pression H.P., la soupape est parfaitement équilibrée, maintenue sur son siège par la seule action du ressort de rappel.

Cet ensemble peut être assemblé directement dans un bloc culasse ou cylindre spécialement usiné ou logé en « lanterne » amovible. Commande hydraulique de levée à durée variable (41). Le système d'injection du moteur diesel est conservé et ré-employé pour régler l'introduction de vapeur sans laminage. L'aiguille de l'injecteur n'est plus utilisée pour injecter du combustible mais seulement comme piston actionnant la tige de la soupape de vapeur : à cet effet, l'injecteur et porte-injecteur sont ré-utilisés avec des modifications mineures p. ex. dans le corps de l'injecteur le percement d'un petit trou radial de décharge à la hauteur de la face de serrage de l'écrou, débouchant dans le guidage de l'aiguille.

La tige-poussoir, en appui sur l'extrémité de la queue de soupape lui transmet le déplacement de ce piston ex-injecteur : sa course, donc la levée de la soupape, est limitée à la valeur fixe de la distance qu'il doit parcourir pour découvrir l'orifice de décharge : c'est cette décharge (45) intéressant chaque tige de soupape dans son guide, qui réalise le graissage intérieur des cylindres.

L'intérêt de ré-utiliser ainsi l'injecteur et aussi son porte-injecteur réside dans leur grande disponibilité et l'économie de l'usinage de pièces spéciales équivalentes assez coûteuses. On dispose en effet sur le porte-injecteur du circuit haute-pression et de son raccord directement utilisable.

Son adaptation dans le prolongement de la tige de soupape et du piston d'équilibrage est facilitée par les usinages existants. Les fuites d'huile graissant la face supérieure du piston d'équilibrage. Si la soupape est montée en « lanterne » l'adaptation de la commande hydraulique sur cette lanterne en fait un « injecteur de vapeur ». ·

La pompe d'injection ·(46) est également retenue et règle le travail du moteur en dosant le débit de vapeur injecté par cycle et par cylindre H.P. : la levée de la soupape est quasi-instantanée et a, de construction, une valeur constante.

Mais sa durée d'ouverture est fonction du débit refoulé :

Or, la pompe d'injection diesel est capable de faire varier ce débit depuis zéro jusqu'à un maximum en fonction du régime assigné à son régulateur et du travail à fournir. .

Ainsi est évité le réglage de la puissance par étranglement ou laminage (coûteux en énergie) puisque l'ouverture de la soupape est toujours totale et affranchie du profil des cames.

Ce système de commande hydraulique par pompe d'injection est couramment utilisé pour commander l'admission de gaz sur les moteurs dual-fuel à 4 temps :

Mais ici le cycle est à deux temps et la pompe doit tourner à la même vitesse que le moteur pour donner une levée par tour. Au même régime, les vitesses et accélérations des cames et galets sont doublées et les durées angulaires de refoulement-levée réduites de moitié : il faut donc choisir une pompe d'injection capable de supporter ce nouveau service, surtout s'il faut beaucoup augmenter le débit pour obtenir la durée angulaire d'ouverture nécessaire pour la puissance maximum. De même, le régulateur de vitesse doit-être ré-adapté.

Entraînement de la pompe : avance, retard, renversement de marche : la transmission de rapport 1/2 du diesel d'origine est conservée : pour obtenir le rapport 1/1, un multiplicateur de vitesse de rapport 2/1 est intercalé entre l'extrémité de l'arbre menant et la pompe (46).

Il s'agit d'un train d'engrenages à satellites dont les arbres d'entrée et sortie sont dans le prolongement l'un de l'autre : prenant appui sur ces arbres, une roue dentée peut tourillonner sur 360°, cette rotation étant commandée par une vis-sans-fin (48) portée par le boîtier fixe.

Sur cette roue se trouve le couple des satellites solidaires entre-eux, en prise avec l'engrenage menant et avec l'engrenage mené de sortie entraînant la pompe : pour une position quelconque de roue (bloquée en rotation par l'irréversibilité de la vis-sans-fin), le train d'engrenages (47) joue uniquement le rôle de multiplicateur de vitesse : ce résultat est obtenu avec des engrenages dont les diamètres sont dans les rapports suivants :

D étant le diamètre primitif du pignon de l'arbre menant (tournant à N/2 t/min et entraînant directement la pompe en diesel), celui du satellite en prise est D/2 et tourne à N t/min. Ce pignon entraîne à la même vitesse N t/min une roue dont il est solidaire, de diamètre-primitif = (D + D/2)/2, laquelle engrène avec une roue identique calée sur l'arbre mené, ainsi entraîné à N t/min.

Avec ces rapports, toute manœuvre de la vis-sans-fin qui modifie la position angulaire de la roue porteuse des satellites a pour résultat un décalage l'arbre mené par rapport à l'arbre menant d'un angle égal en sens inverse, c'est-à-dire, donne de l'avance ou du retard.

Renversement du sens de rotation :

Pour bénéficier de cette possibilité, il faut que la pompe à huile de graissage (49) puisse refouler dans les 2 sens. Lorsque la machine tourne normalement, l'injection de vapeur dans le cylindre H.P. débute au point-mort haut ou avec une légère avance sur celui-ci (env. 10° d'A.O.A.) :

Ce résultat est obtenu avec un certain calage de la pompe qui n'utilise, pour chaque sens de rotation, que l'un ou l'autre des deux flancs de sa came à profil symétrique.

Dans le sens inverse de rotation, c'est l'autre flanc qu'il faut mettre en œuvre : il est donc nécessaire, pour situer l'injection identiquement par rapport au point-mort haut du cylindre, de décaler l'arbre à cames de la pompe d'une valeur angulaire égale à « l'ouverture » de la came sur son noyau.

Cet angle est « l'angle de renversement de marche ».

Il est particulièrement aisé d'opérer ce décalage, dans un sens ou dans l'autre à l'aide du mécanisme précédemment décrit commandé par la vis-sans-fin.

Supposons donc ce décalage dans le sens des avances de la rotation en cours : l'augmentation d'avance ainsi pratiquée a pour résultat de déplacer l'injection de vapeur bien avant le P.M.H., freinant la machine.

Après un très bref arrêt, elle redémarre en sens inverse, au même régime que précédemment, dès que le décalage complet selon l'angle de renversement de marche est réalisé. La commande de la vis sans fin (48) est conjuguée avec celle du levier de vitesse (50) du régulateur de la pompe d'injection, afin de réduire l'introduction au fur et à mesure que la machine se freine : à la position « neutre » le levier du régulateur revient au « ralenti ». Adaptation de ce moteur alternatif issu d'un diesel pour l'application sous marine visée par l'invention (PL. 5/9 et 6/9). Le réfrigérant eau douce/eau brute (e) du diesel, avec son vase d'expansion (f), est réutilisé comme bache alimentaire, porté par le moteur en son emplacement d'origine, le faisceau tubulaire étant parcouru par l'eau de refroidissement en provenance du condenseur (c).

Son vase d'expansion est complété par un séparateur à chicanes (s) pour dégraisser l'eau de condensation extraite du condenseur. De là elle est refoulée par l'ex-pompe de circulation (i) du diesel dans l'enveloppe de la chaudière : après y avoir prélevé de la chaleur sur la combustion pour limiter la température des parois, cette eau vient dans le pot d'échappement à barbotage (d) ou se fait, après condensation de la vapeur d'eau et refroidissement des gaz, le dégagement et le captage du $CO_2$ par le compresseur (y). Retournant à la bache (f) par le thermostat (t) de l'ancien circuit de refroidissement du diesel conservé, elle passe normalement par le circuit « by-pass » (afin de ne pas perdre de la chaleur prélevée), tant que sa température n'excède pas 85 °C : au-delà, (la température à la bache ne pouvant guère dépasser 90 °C, il faut bien consentir à perdre la chaleur excédentaire de la chaudière évacuée par l'ouverture du thermostat vers l'eau de circuit de refroidissement du condenseur.

Dans ce réfrigérant occasionnel, combiné avec la bache, aspire la pompe alimentaire (m) de la chaudière entraînée par l'arbre porteur de la roue de chauffe : l'eau à 80/90 °C maxi, est refoulée par cette pompe à pistons vers 110 bar et traverse un 2e réchauffeur (q) constitué par le refroidisseur d'huile du moteur (à environ 100 °C), de manière à récupérer la chaleur des pertes mécaniques. De là, elle passe dans un 3e et avant-dernier réchauffeur (0) spécialement construit (comme le précédent) pour résister à la pression, alimenté par de la vapeur de soutirage prélevée à l'échappement des cylindres BP sous 4 à 5 bar : elle en sort réchauffée vers 150 à 160 °C, toujours sous 110 bar, pour aboutir à l'entrée de la pompe de circulation forcée constituée par la roue de chauffe : là, dans la nappe des tubes réchauffeurs (4) se termine la phase d'échauffement et compression de l'eau qui l'amène à la température de 310 °C sous 101 bar abs. de pression.

Ce soutirage (n) en cours de détente est un procédé bien connu et très efficace pour améliorer le rendement du cycle théorique de Rankine-Hirn qui passe ici de 0,42 à 0,46 pour un prélèvement de l'ordre de 20 % de la masse évoluante.

Les corps de cylindres H.P. ou leurs culasses supportent l'ensemble du turbo-générateur de vapeur avec condenseur incorporé, et assurent les fonctions de distribution de vapeur et échappement sans aucun tuyautage à partir des conduits du corps central (34) démarrage : la mise en marche n'est pas aussi immédiate que celle du diesel, mais elle est obtenue sans aucun démarreur dans un délai très bref grâce à la conception de la chaudière et aux artifices suivants, en supposant plusieurs brûleurs (9) :

1. Les arrivées de gaz aux brûleurs (combustible et oxygène) sont contrôlées par les électrovannes dont le solénoïde est excité pour ouverture et maintenu tel durant le fonctionnement.

2. Ce courant d'excitation alimente le dispositif d'allumage d'un brûleur pilote : résistance au rouge, arc électrique, etc. Le système de renversement de marche du moteur étant en position « neutre », le débit de mélange gaz-oxygène correspond à la marche au ralenti. La mise sous-tension de ce circuit électrique provoque l'allumage du brûleur-pilote et la montée en pression : le fait que la roue de chauffe soit encore immobile n'empêche pas une production de vapeur d'autant plus rapide qu'il y a peu d'eau dans la chaudière, provoquant le soulagement de la soupape de sûreté (42) et le démarrage de la turbine (20) :

Cette rotation assure immédiatement l'amorçage des auxiliaires (pompes de circulation, extraction, vide), notamment l'indispensable alimentation de la chaudière.

Alors, la machine peut démarrer seule (3 cycl. à 120°) et être utilisé après un bref réchauffage au ralenti : ceci à condition qu'un certain nombre de manos et thermocontacts aient attesté que tout est en ordre et déverrouillé le levier (50) de commande de vitesse de la pompe d'injection qui est ainsi autorisé à quitter la position « ralenti ».

En cas de non départ (2 et 4 cycl. à 180°), le démarrage peut être obtenu à l'aide du « renversement de marche » (47) : la rotation de la roue porte-satellite entraîne celle de l'arbre à came de la pompe d'injection (46) provoquant une « injection » de vapeur qui « balance » le moteur jusqu'à une position favorable au départ. Régulation de la chauffe et de la puissance : la régulation de la vitesse de rotation et de la charge du moteur est assurée par le régulateur de vitesse, mécanique ou hydraulique, de la pompe d'injection diesel (46).

L'organe de réglage dont dispose l'utilisateur est, comme pour le diesel, le levier de commande de vitesse (50) du régulateur qui fixe le régime de rotation (régulateur « toutes vitesses ») : mais ici, il n'agit que sur la durée d'injection de vapeur et non sur la quantité de combustible brûlée. Il est donc indispensable d'asservir au « débit injecté » qui commande l'introduction de vapeur, le débit de gaz aux brûleurs et, le cas échéant, le nombre de brûleurs en service (la plage de réglage d'un brûleur unique pouvant être beaucoup trop étroite).

Le régulateur de vitesse doit donc actionner, en plus de la « crémaillère » de la pompe d'injection, l'organe de réglage du débit de gaz aux brûleurs en service et un contacteur commandant ces allumages ou extinctions selon le besoin.

Pour réaliser en permanence le mélange stœchiométrique oxygène/gaz et selon la technique de chauffe employée, il peut aussi être nécessaire d'agir à la fois sur plusieurs détendeurs ce qui peut demander un travail important.

Aussi le régulateur doit être très énergique : un régulateur hydraulique à servo-moteur, s'impose.

Si un montage non-incorporé à la pompe d'injection de ce type de régulateur est prévu sur le diesel d'origine, il y a tout avantage à l'adopter avec son support et entraînement à demi-vitesse de rotation, évitant ainsi toute transformation. L'adaptation pour les diverses utilisations, notamment pour groupe électrogène est facilitée et sûrement plus satisfaisante.

3. Développement du turbo-générateur de vapeur avec condenseur incorporé : turbo-moteur monobloc (PL. 7/9).

L'organe de détente du moteur à combustion interne objet de l'invention peut être une turbine.

S'il s'agit de produire principalement de l'énergie électrique, un groupe turbo-alternateur est particulièrement intéressant : aussi l'invention comprend l'adaptation d'une turbine motrice dans le turbo-générateur à condenseur incorporé au lieu d'utiliser la vapeur dans un moteur-détendeur extérieur. Cette partie de l'invention consiste :

A utiliser le générateur de vapeur original comme décrit ci-dessus avec condenseur et auxiliaires tel que précédemment décrit.

A refondre le corps central de cet appareil pour y monter sur l'arbre primaire plusieurs roues de turbine s'ajoutant à celle déjà placée dans le condenseur et constituant toujours le dernier étage de détente.

A réaliser la machine thermique autonome spécialement adaptée pour cette application sous marine sous la forme d'un turbo-alternateur.

Pour obtenir un bon rendement, le cycle adopté est encore celui « à vapeur surchauffée » de Hirn/Rankine » amélioré par « soutirage » de vapeur en cours de détente.

Configuration élémentaire du turbo-moteur :

Chaque étage de détente est constitué par une roue du type « à réaction pure » avec tuyères à géométrie variable contrôlée par régulateur centrifuge, en tout point semblable dans le principe à celle déjà décrite employée comme dernier étage de détente et placée dans le condenseur. Leur nombre est aussi faible que possible pour limiter les pertes et les complications mécaniques : en effet ces roues sont toutes placées sur l'arbre primaire qu'elles entraînent à une vitesse très élevée (de l'ordre de 40 000 t/min). Or, les paliers de celui-ci doivent être reportés loin des zones à haute température et là ou ils peuvent être lubrifiés, c'est-à-dire dans l'ensemble mécanique comportant le réducteur de vitesse.

Il s'ensuit que le porte-à-faux déjà sensible avec la roue unique du turbo-générateur initial est aggravé par ces roues supplémentaires. Comme il est nécessaire de les enfermer dans une « cloche » (51) collectant la vapeur détendue à chaque étage et la canalisant au suivant, un palier-support supplémentaire (52) s'impose : placé devant la roue H.P. (53) ce palier à la particularité d'être lubrifié par l'eau sous pression d'alimentation de la chaudière dérivée en quantité dosée depuis la chambre d'entrée (54) du réchauffeur d'alimentation par soutirage (0) intégré à l'appareil dans ce montage.

En effet l'ancien corps central (34) comme décrit ci-dessus est remplacé par le fond de chaudière (55), un disque-palier (56) et ce réchauffeur (0). La « boîte étanche » de distribution de vapeur H.P. est réduite de chaque côté des trous radiaux de l'arbre (3) à une suite de fines gorges de détente avec un aussi faible jeu radial que possible : côté « chaudière », la fuite est combattue par la pression d'eau venant du palier (52) ; côté « turbines » il est considéré que les fuites vont travailler dans les roues et qu'il est inutile de les combattre autrement que par la réduction des jeux radiaux et latéraux de montage. Il est aussi estimé que la pression s'exerçant en tous sens sur ces pièces leur évite tout contact mécanique, chacune étant plus ou moins portée ou préservée de frottement par le coussin de vapeur surchauffée résultant des fuites tolérées.

L'idéal est de réaliser toute la détente au maximum en trois roues, y compris celle placée dans le condenseur. Le soutirage d'environ 20 % de la masse évoluante se fait après détente dans la 2e roue M.P. par de simples trous (57) percés dans la cloche (51) : ainsi la vapeur prélevée « arrose » le faisceau réchauffeur (0) conçu comme celui du condenseur (28) en « cage d'écureuil ». L'eau de condensation provenant de cet échange de chaleur va automatiquement au condenseur aspirée par le vide qui y règne en passant obligatoirement par le faible jeu entre cloche (51) et le fond de condenseur (58) : ainsi est réalisé un joint hydraulique utilisant la force centrifuge pour freiner l'écoulement au condenseur grâce au sens de la conicité de la cloche (51).

La roue de turbine H.P. selon PL. 8/9 est une variante, alimentée par l'axe, du modèle précédemment décrit (PL 2/9) alimenté par le côté et utilisé pour les étages MP et BP.

En raison du porte-à-faux du rotor et pour soulager le palier supplémentaire (52), la disposition verticale est préférable (mais non obligatoire) d'autant qu'elle est bénéfique à la fois pour le condenseur, pour le drainage du réchauffeur (0) et pour le graissage du réducteur (22). Or, pour réaliser un turbo-alternateur cette disposition n'est pas trop défavorable si justement, on limite l'encombrement en hauteur par un faible nombre d'étages de détente : l'alternateur placé en partie basse et qui représente la plus grande partie du poids de l'ensemble, constitue alors le socle d'un appareil dont le centre de gravité reste suffisamment bas.

La vitesse de rotation de l'arbre secondaire, après réduction est de 3 000 T/min pour produire du courant alternatif à 50 Hertz, 3 600 t/min pour 60 Hertz.

Comme avec le moteur alternatif le schéma des circuits (PL 5/9) reste valable, la seule différence étant l'intégration du réchauffeur (o) et la suppression du purgeur automatique (p) : un réfrigérant eau douce/eau brute de diesel avec vase d'expansion doit être utilisé comme bache-alimentaire, porté par l'appareil lui-même ou placé à côté, dans l'environnement immédiat. Son faisceau tubulaire est parcouru par l'eau de refroidissement sortant du condenseur, mais il n'y a plus lieu de prévoir un séparateur d'huile à chicanes puisqu'avec la turbine aucun graissage intérieur n'est nécessaire.

Comme précédemment, le dégagement et le captage du CO2 produit par la combustion se fait dans le pot à barbotage (d) d'où le compresseur (y) assure son rejet ou sa liquéfaction. La pompe de circulation (i) de la chaudière reste nécessaire pour la refroidir : après avoir ainsi prélevé de la chaleur sur la combustion pour limiter la température des parois, cette eau vient à l'entrée de ce réfrigérant-bache, passant par le thermostat (t) du circuit de refroidissement, également conservé : normalement elle n'y est pas refroidie, passant par le circuit « by-pass » commandé par ce thermostat (pour ne pas perdre de la chaleur prélevée) tant que la température n'excède pas 85 °C : au-delà, (la température à la bache ne pouvant guère dépasser 90 °C, il faut bien consentir à perdre la chaleur excédentaire de la chaudière évacuée par l'ouverture du thermostat vers l'eau du circuit de refroidissement du condenseur. Dans ce réfrigérant occasionnel combiné avec la bache aspire la pompe alimentaire de la chaudière entraînée par l'arbre secondaire : l'eau à 80/90 °C maxi, est refroidie par cette pompe à pistons sous 110 bar et traverse un 2e réchauffeur constitué par le refroidisseur d'huile du réducteur de vitessse à double train épicycloïdal (à environ 100 °C), de manière à récupérer la chaleur des pertes mécaniques. De là, elle passe dans un 3e et avant-dernier réchauffeur (o) désormais intégré à l'appareil, spécialement construit (comme le précédent) pour résister à la pression, alimenté par de la vapeur de soutirage prélevée sous 4 à 5 bar à l'échappement de l'avant-dernier étage de détente : elle en sort réchauffée vers 150 à 160 °C, toujours sous 110 bar, pour aboutir à l'entrée de la pompe de circulation forcée constituée par la roue de chauffe : là, dans la nappe des tubes réchauffeurs se termine la phase d'échauffement et compression de l'eau qui l'amène à la température de 310 °C sous 101 bar abs. de pression.

Ce soutirage en cours de détente est un procédé bien connu et très efficace pour améliorer le rendement du cycle théorique de Rankine/Hirn qui passe ici de 0,42 à 0,46 pour un prélèvement de l'ordre de 20 % de la masse évoluante.

Régulation de la chauffe et de la puissance : la régulation de la vitesse de rotation et de la charge du turbo-moteur est assurée par un régulateur de vitesse centrifuge placé sur l'arbre secondaire ou sur un arbre tertiaire selon la commodité du montage. (S'il s'agit d'un turbo-alternateur certains auxiliaires, notamment le compresseur de CO2 et la pompe de rejet de l'eau peuvent être indépendants, mus par moteur électrique). L'organe de réglage dont dispose l'utilisateur est, comme pour un diesel, le levier de commande de vitesse de ce régulateur qui fixe le régime de rotation (régulateur « toutes vitesses ») ou une commande « plus-vite/moins-vite » (groupe électrogène) : ce régulateur agit directement sur le débit de gaz aux brûleurs et, le cas échéant sur le nombre de brûleurs en service (la plage de réglage d'un brûleur unique pouvant être beaucoup trop étroite) et maintien constante la pression de vapeur à la chaudière. En effet il n'y a pas lieu d'agir sur le débit de vapeur introduit dans la turbine puisque celle-ci se conforme automatiquement au travail demandé à chaque étage, en section et forme de tuyère grâce à sa propre régulation fonction de la vitesse et des pressions d'amont.

Ce régulateur, sensible à la vitesse du turbo-moteur et à la pression de vapeur délivrée par la chaudière actionne donc uniquement l'organe de réglage du débit de gaz aux brûleurs en service et un contacteur d'électrovannes commandant les allumages ou extinctions selon le besoin.

Pour réaliser en permanence le mélange stœchiométrique oxygène/gaz et selon la technique de chauffe employée, il peut aussi être nécessaire d'agir à la fois sur plusieurs détendeurs ce qui peut demander un travail important. Il peut s'avérer aussi nécessaire de faire contrôler la température de surchauffe par ce régulateur en l'asservissant à un système pyrométrique. Aussi le régulateur doit être très énergique : un régulateur hydraulique à servo-moteur, s'impose.

Démarrage : la mise en marche n'est pas aussi immédiate que celle du diesel, mais elle est obtenue sans aucun démarreur dans un délai très bref grâce à la conception de la chaudière et aux artifices suivants, en supposant plusieurs brûleurs :

1. Les arrivées de gaz aux brûleurs (combustible et oxygène) sont contrôlées par des électrovannes dont le solénoïde est excité pour ouverture et maintenu tel durant le fonctionnement.

2. Ce courant d'excitation alimente le dispositif d'allumage d'un brûleur pilote : résistance au rouge, arc électrique, etc. Le régulateur de vitesse étant du type « à vitesse constante avec plus-vite/moins vite », le débit de mélange gaz-oxygène correspond à la marche à vide. La mise sous-tension de ce circuit électrique provoque l'allumage du brûleur-pilote et la montée en pression : le fait que la roue en chauffe soit encore immobile n'empêche pas une production de vapeur d'autant plus rapide qu'il y a peu d'eau dans la chaudière, provoquant le démarrage direct de la turbine (il y a toujours une soupape de sûreté, mais qui n'a plus de raison de décharger dans les turbines, placée entre le corps de réchauffeur (o) et l'enveloppe (27) du condenseur) : cette rotation assure immédiatement l'amorçage des auxiliaires (pompes de circulation, extraction, vide), et, notamment, l'indispensable alimentation de la chaudière. Alors, la turbine se stabilise à la vitesse maxi à vide et peut être mise en charge après un bref réchauffage à condition qu'un certain nombre de manos et thermocontacts aient attesté que tout est en ordre.

Planche 5/9 schéma simplifié des circuits.
Légende :
   a Moteur-détenteur
   b Chaudière
   c Condenseur
   d Pot à barbotage
   e ex-réfrigérant eau diesel
   f Vase expansion : bache
   g Extraction d'huile
   h Caisse asp. eau en excès
   i Ppe circul. chaudière
   j Entrée réfrig. chaud.
   k Pompe de circul. Ppale
   l Pompe d'extraction
   m Pompe alimentaire
   n Soutirage vapeur BP
   o Réchauffeur par soutirage
   p Purgeur automatique
   q Réfrigérant huile-moteur
   r Retour purge asp. extract.
   s Séparateur d'huile/bache
   t Thermostat et by-pass
   u Recyclage gaz de la bache
   v Echapt. chaudière vers pot
   w Refoult. ppe à air/bache
   x Pompe à vide, air et $CO_2$
   y1 Turbo compresseur de $CO_2$ 1er et.
   y Compresseur attelé et syst. de liquéfaction du $CO_2$
   z Pompe de rejet ou stockage de l'eau produite (en excès).

**Revendications**

1. Machine thermique à combustion externe d'un hydrocarbure composé exclusivement de C et H, utilisant la vapeur d'eau selon cycle de Rankine/Hirn à haute pression, surchauffe et soutirage, conçue pour équiper un sous-marin autonome emportant, outre le combustible, l'oxgyène comburant et astreint à conserver à bord les résidus de combustion ($CO_2$ & eau), caractérisée en ce qu'elle est constituée d'un ensemble monobloc générateur-condenseur de vapeur avec turbine et réducteur de vitesse (22) incorporés, comprenant une chaudière (b) à vaporisation instantanée par surfaces de chauffe tournantes, débitant soit dans un moteur-détendeur extérieur alternatif suivi d'une turbine (20) placée dans le condenseur (c), soit dans un moteur-détendeur intérieur à turbine multiple dont le dernier étage de détente est situé également dans le condenseur (c), l'arbre de sortie du réducteur de la turbine assurant dans les 2 cas l'entraînement en rotation de surfaces de chauffe de la chaudière, de ses pompes alimentaire et circulation (m, i), des pompes du condenseur (k, l, x) ainsi que les auxiliaires (y, z) d'un système de captage des résidus de combustion constitué d'un pot à barbotage (d) dans lequel l'eau contenue dans ces résidus se condense dans celle en circuit et où le $CO_2$ est aspiré par le compresseur multi-étagé (y), cet ensemble étant associé à un système de récupération de chaleur réchauffant l'eau d'alimentation de la chaudière en 3 étages, le 1er constitué par le prélèvement de chaleur sur l'enveloppe extérieure de la chaudière (b) et sur les gaz dans le pot à barbotage (d) au moyen de la circulation assurée par la pompe (i), contrôlée en température vers 90 °C par le thermostat (t) qui la dirige alors au vase d'expansion (f) servant de bache-alimentaire, communicant avec le réfrigérant (e) parcouru par l'eau de circulation sortant du condenseur afin d'évacuer la chaleur excédentaire s'il y a lieu, et où se trouvent également la caisse d'aspiration d'eau récupérée en excès (H) avec séparateur-extracteur d'huile (s, g, si le moteur-détendeur est alternatif), le tuyautage de recyclage des gaz de bache (u), ainsi que l'aspiration de la pompe alimentaire (m) refoulant aux 2e et 3e étages de réchauffage constitués par le réfrigérant d'huile (q) et le réchauffeur par soutirage (o), tandis que l'équivalent de l'eau produite, captée par la pompe (z) dans la caisse (h), s'accumule dans une capacité de la coque du sous-marin dont les parois sont en contact avec l'eau de mer extérieure pour qu'elle s'y refroidisse et puisse servir comme eau de circulation du condenseur (source froide) afin d'éviter les fortes contraintes de pression que subirait un circuit de refroidissement direct par eau de mer à grande profondeur, la machine permettant finalement le stockage à bord en phase liquide des résidus de combustion $CO_2$, le $CO_2$ étant comprimé par le compresseur (y) et refroidi pour être liquéfiable au moyen du froid venant de la détente du gaz combustible et de l'oxygène-comburant stockés sous haute-pression, puis envoyé — liquide — à la place de l'oxygène dans ses propres bouteilles de stockage au fur et à mesure qu'il est consommé.

2. Machine thermique selon revendication 1 comportant une chaudière à surfaces de chauffe tournantes (en 1er lieu pour obtenir des vitesses relatives élevées de ces surfaces de chauffe par rapport aux gaz chauds de la combustion, nécessaires pour un transfert de chaleur optimum ; en 2e lieu, pour centrifuger les gaz), caractérisée par l'implantation radiale des tubes réchauffeurs d'eau (4) et surchauffeurs de vapeur (11), dans le moyeu d'un arbre tournant (3) foré de canaux axiaux d'alimentation en eau et de collecte de la vapeur produite ; cet ensemble constituant une roue de chauffe avec 2 jantes creuses (7) portant les tubes vaporisateurs (8), aplatis et orientés, disposés selon la génératrice d'un cylindre et servant d'impulseurs de gaz lors de la rotation de cette roue à l'intérieur de la chambre de combustion (1), le tout étant monté concentriquement dans une double enveloppe (13) refroidie par l'eau d'alimentation, portant les dispositifs d'étanchéité (43, 44) aux passages de l'arbre (3), palier-support et le (ou les) brûleur en façade.

3. Machine thermique selon revendication 1 comportant une chaudière rotative selon la revendication 2 caractérisée par la disposition de sa chambre de combustion (1) en forme de double-tore concentrique à la roue de chauffe (2) avec paroi en tole d'acier réfractaire formant à la fois écran-séparateur et réflecteur de rayonnement (14) localement perforée ou fendue (15), suspendue avec espacement et en quelques points de l'enveloppe extérieure refroidie à double paroi (13) laquelle est conçue pour supporter une combustion sous-pression.

4. Machine thermique selon revendication 1 avec chaudière rotative selon revendications 2 et 3, caractérisée par la mise en rotation des gaz de combustion, tendant à séparer par différence de densité, le $CO_2$ du CO éventuel et de la vapeur d'eau, favorisant ainsi la réduction du CO éventuel par la vapeur d'eau afin d'amener le $CO_2$ final avec la vapeur d'eau restante à travers des perforations et fentes de sortie (15), ensuite dans un pot à barbotage inclus dans le circuit de refroidissement de la chaudière, où s'effectue la condensation de l'eau produite et le captage du $CO_2$ par le compresseur (y).

5. Machine thermique à vapeur selon revendications 1, 2, 3 et 4 utilisant une ou plusieurs roues de turbine, chacune de ces roues étant caractérisée en ce qu'elle est du type « à réaction pure » avec tuyères à « géométrie variable », constituée par 2 disques (24 et 25) emprisonnant un manchon (26) libre en rotation selon un arc limité, l'un des disques et le manchon portant respectivement les profils extérieur et intérieur des tuyères, de sorte que la position relative de ces pièces (24/25 et 26) détermine la forme de l'ajutage de détente et sa section de passage au col, ce positionnement étant obtenu et contrôlé par un régulateur centrifuge placé dans la turbine elle-même et qui est de plus un limiteur de survitesse, caractérisé par des rainures de guidage ménagées dans le disque (24) et le manchon (26), orientées de part et d'autre de la direction radiale de la force centrifuge, dans lesquelles peuvent se mouvoir des rouleaux cylindriques (m) constituant les masses de ce régulateur, tendant à fermer les tuyères sous l'effet de la force centrifuge alors que la vapeur (admise par le centre ou par le côté de la roue de turbine), qui en est le ressort antagoniste, tend à les ouvrir ; un régulateur unique commandant plusieurs roues si la turbine est multiple.

6. Machine thermique à vapeur selon revendications 1, 2, 3, 4 et 5 utilisant comme fluide caloporteur de l'eau en circuit fermé grâce à un condenseur (c), caractérisé en ce qu'il sert d'enveloppe à la turbine (20) constituant le dernier étage de détente du moteur-détendeur extérieur ou à l'ensemble de la turbine-multiple (moteur-détendeur intérieur), ce condenseur étant cylindrique avec un faisceau échangeur tubulaire par surface fixe (28) en forme de cage d'écureuil, avec boîtes collectrices annulaires (35) et (36), parcouru par l'eau d'un circuit de refroidissement-indirect échangeant la chaleur à travers la coque du sous-marin, cette eau étant celle, en quantité croissante, provenant de la combustion, captée et stockée à bord dans le compartiment où se fait cet échange de chaleur par paroi avec l'eau de mer extérieure, l'étanchéité à la traversée des pièces tournantes, arbre et tambour de turbine de ce condenseur fonctionnant sous vide étant obtenue par joint hydraulique (31) qui utilise la force centrifuge s'exerçant sur l'eau plaquée sur des parois pour former barrage, cette eau provenant de la récupération de fuites (31) aux boîtes étanches d'alimentation (43) ou du condensat du réchauffeur d'eau d'alimentation par soutirage (o).

7. Machine thermique à vapeur selon revendications 1, 2, 3, 4, 5 et 6 caractérisée en ce qu'elle utilise comme moteur-détendeur extérieur un moteur volumétrique alternatif (a) dans lequel la plus grande partie de la détente de la vapeur est réalisée, alors que la fraction restante se détend dans la turbine (20) incorporée au générateur-condenseur monobloc, ce moteur-alternatif étant lui-même construit à partir d'un quelconque moteur diesel existant en réutilisant toute la partie mécanique située en dessous des culasses d'origine, y compris la pompe d'injection (46) pour la commande des soupapes (39), entraînée par un train d'engrenages à satellites (47) assurant renversement de marche et mise-en-train par manœuvre de la vis sans fin de commande (48).

8. Machine thermique à vapeur selon revendications 1, 2, 3, 4, 5, 6 et 7 utilisant comme moteur-détendeur extérieur le moteur alternatif selon revendication 7, caractérisée en ce que le dispositif de graissage-intérieur des cylindres de ce moteur alternatif utilise la fuite d'huile aux guides des soupapes (39), le circuit d'huile en retour de la commande hydraulique d'ouverture étant dérivé pour baigner les guides et constituer un doseur.

9. Machine thermique selon revendication 1, 2, 3, 4 et 6, utilisant comme moteur-détendeur intérieur un ensemble de turbines de détente caractérisé par un assemblage de roues motrices selon revendication 5, réunies dans une « cloche » (51) canalisant la vapeur aux différents étages de détente, le montage pouvant être en série exigeant un tambour d'équilibrage de poussée axiale, ou en parallèle, l'écoulement se divisant après détente dans l'étage HP en 2 flux égaux, de direction axiale opposée, chacun se détendant ensuite dans une roue MP puis dans une roue BP, ainsi que le permet la disposition de 2 groupes identiques de roues MP et BP symétriquement de chaque côté d'une roue HP centrale unique et annule toute poussée axiale, le soutirage de vapeur en cours de détente se faisant par les trous (57) pratiqués au point thermodynamiquement convenable débouchant dans une chambre annulaire concentrique (o) intégrée à l'appareil, le condensat retournant au condenseur après avoir contribué à l'étanchéité du joint hydraulique selon revendication 6.

10. Machine thermique à vapeur selon revendications 1, 2, 3, 4, 5, 6 et 9 avec moteur-détendeur intérieur formant un turbo-moteur monobloc, caractérisée en ce que l'alimentation en vapeur à haute pression se fait par l'arbre central au droit de la roue HP (53) de manière à ce que l'ensemble de la turbine-motrice inclus dans la « cloche » (51) soit sustenté par la pression, le supportage par l'arbre s'effectuant avec interposition d'un coussin de vapeur évitant tout frottement mécanique.

11. Machine thermique à vapeur selon revendications 1, 2, 3, 4, 5, 6, 7, 8, 9 et 10 caractérisée en ce que, par sécurité (à la mise en route ou en cas de défaillance de pression de vapeur), la turbine est, en plus de la sustentation par coussin de vapeur, supportée par des paliers supplémentaires (52) lubrifiés par l'eau sous haute pression dérivée du circuit d'alimentation de la chaudière et dont le rôle est aussi de limiter les températures dans la région concernée tout en contribuant au fonctionnement des dispositifs d'étanchéité autour de l'arbre, sans risques de dépôts gênants, cette eau restant toujours totalement déminéralisée puisque qu'il s'agit d'un condensat d'eau chimiquement pure provenant de la combustion.

**Claims**

1. Prime mover working on the external combustion of a hydrocarbon exclusively composed of C and H, using steam according to the Rankine Hirn cycle with high pressure, re-heating and bleeding, designed to be fitted in a self-sustaining submarine which carries, besides the fuel, the combustion oxygen and which has to keep on board the combustion residues ($CO_2$ and water), characterized in that it is constituted of a monobloc steam generator-condenser assembly with incorporated turbine and speed reduction gear (22), comprising a boiler (b) with instant steaming of the rotating heat surfaces, delivering steam either in an external reciprocating engine-relief valve assembly followed by a turbine (20) placed in the condenser (c), or in a multiple-turbine internal engine-reducing valve assembly of which the last reduction stage is also situated inside the condenser (c), the output shaft of the turbine reduction gear, in both cases, driving in rotation the heating surfaces of the boiler, its supply and feed pumps (m, i), the condenser pumps (k, l, x) as well as auxiliaries (y, z) of a combustion residual collecting system constituted of a bubbling-can (d) in which the water contained in said residues condenses in the circuit water and where the $CO_2$ is sucked up by the multi-staged compressor (y), said assembly being associated to a heat-recovery system heating up the water fed to the boiler in three stages, the first stage consisting in drawing the heat from the outer jacket of the boiler (b) and from the gases contained in the bubbling can (d) by means of the flow ket up by the pump (i) at a temperature controlled to about 90 °C by the thermostat (t) which then directs it towards san expanding vessel (f) acting as feed water tank, and communicating with the cooler (e) run through by the flowing water issued from the condenser in order to expel any excess heat and where are also situated the excess water suction box (h) equipped with oil separator-extractor (s, g, if the engine-reducing valve assembly is reciprocating), the recycling pipe for the gases of the tank (u), as well as the induction pipe of the feed pump (m) which delivers to the second and third heating stages constituted by the oil coolant (q) and the preheater by bleeding (o), whereas the equivalent of the produced water collected by pump (z) in the box (h) accumulates in a capacity of the submarine hull of which the walls are in contact with the sea water, in which capacity it can cool down and serve as flowing water for the condenser (cold source) thereby preventing the strong pressures which would be exerted on a direct sea water colling circuit, at great depths, the machine then permitting the storage onboard in liquid phase of the $CO_2$ combustion residues, the $CO_2$ being compressed by compressor (y) and colled so as to be liquefiable by the cold obtained from the expansion of the fuel-gas and of the combustion oxygen stored under high pressure, and then to be sent in liquid form, instead of the oxygen, in its own storage cylinders, as and when it is used.

2. Prime mover according to claim 1, comprising a boiler with rotating heating surfaces (firstly, to obtain high relative speeds of said heating surfaces compared with the hot combustion gases, which speeds are necessary in order to obtain a maximum transfer of heat ; secondly, to centrifuge the gases), characterized by the radial implanting of the water-heating (4) and steam-overheating (11) tubes, in the hub of a rotary shaft (3) equipped with axial channels for supplying water and collecting the produced steam ; said assembly constituting a heating wheel with two hollow rims (7) carrying the spraying tubes (8) flattened and oriented, and arranged along the generatrix of a cylinder and acting as g s pulsers when said wheel turns inside the combustion chamber (1), the whole assembly being mounted concentrically inside a double shell (13) cooled by the supply water, and carrying the tightness devices (43, 44) at the passages of shaft (3), support-bearing and burner or burners in facing relationship.

3. Prime mover according to claim 1, comprising a rotary boiler according to claim 2, characterized by the disposition of its combustion chamber (1) shaped as a double toroid concentric to the heating wheel (2) with a wall in refractory steel sheet forming both a separator-screen and a radiation reflector (14), locally perforated or slotted (15), suspended with spacing and in certain points of the cooled double-walled outer shell (13) which latter is designed to with-stand a combustion under pressure.

4. Prime mover according to claim 1, with rotary boiler according to claims 2 and 3, characterized by the rotation of the combustion gases which tend to separate, by density difference, the $CO_2$ from any CO and from the steam, thereby contributing to reducing any CO by the steam in order to bring the final $CO_2$ with the remaining steam through outlet perforations and slots (15), and then into a bubbling tank provided in the boiler cooling circuit where the produced water is condensed and where the $CO_2$ is collected by the compressor (y).

5. Steam prime mover according to claims 1, 2, 3 and 4, using one or more turbine wheels, each wheel being characterized in that it is of the « pure reaction » type with « variable geometry » nozzles, and constituted by two disks (24 and 25) confining a sleeve (26) which is freely rotatable according to a limited arc, one of said disks and the sleeve respectively carrying the outer and inner profiles of the nozzles, so that the relative position of said parts (24/25 and 26) determines the shape of the expanding nozzle and its passage cross-section at the neck, this positioning being obtained and controlled by a centrifugal governor placed in the turbine proper and which is mainly an excess speed limiter, characterized by guiding grooves provided in the disk (24) and in the sleeve (26), oriented on either side of the radial direction of the centrifugal force, in which grooves can move cylindrical rollers (m) which constitute the masses of said regulator, tending to close the nozzles under the effect of the centrifugal force, whereas the steam (admitted through the center or the side of the turbine wheel), which is the counterspring thereof, tends to open them ; a single regulator controlling more than one wheel if the turbine is a multiple one.

6. Steam prime mover, according to claims 1, 2, 3, 4 and 5, using as heat-carrying fluid, water in closed circuit due to a condenser (c), characterized in that it is used as a shell for the turbine (20) constituting the last expanding stage of the external engine-reducing valve assembly or of the multiple turbine assembly (or internalengine-reducing valve assembly), said condenser being cylindrical with a tubular exchanging bundle by fixed surface (28) shaped as a cage winding, with annular collecting boxes (35) and (36), run through by the water of an indirect cooling circuit, exchanging the heat though the hull of the submarine, said water coming in increasing quantity from the combustion and being collected and stored on board in the compartment where the heat is exchanged through the wall with the outside sea water, tightness at the crossing through of these rotary parts, shaft and turbine drum of said condenser working in vacuum being achieved by hydraulic joint (31) which uses the centrifugal force exerted on the water applied against the wall, in order to form a barrier, said water being recovered from leaks (31) in the sealed supply boxes (43) or being the condensation water obtained from the supply water heater (o) by the bleeding.

7. Steam prime mover according to claims 1, 2, 3, 4, 5 and 6, characterized in that it uses as external engine-reducing valve assembly, a volumetric reciprocating engine (a) in which most of the steam expansion is obtained while the remaining fraction expands in the turbine (20) incorporated to the monobloc generator-condenser, said reciprocating engine being constructed from any existing Diesel engine by re-utilizing all the mechanical parts situated under the original cylinder heads, including the injection pump (46) for controlling the valves (39), said pump being driven by a satellite gear train (47) ensuring reversing of the motion and start-up by operation of the control endless screw (48).

8. Steam prime mover according to claims 1, 2, 3, 4, 5, 6 and 7 using as external engine-reducing valve assembly, the reciprocating engine according to claim 7, characterized in that the internal greasing device for the cylinder of this reciprocating engine uses the oil leak from the valve-stem guides (39), the oil circuit returning from the opening hydraulic control being deviated so as to flow through the guides and constitute a measurer.

9. Prime mover according to claims 1, 2, 3, 4 et 6, using as internal engine-reducing valve assembly, a set of expansion turbines, characterized by an assembly of driving wheels according to claim 5, regrouped inside a « bell » (51) channelling the steam to the different stages of expansion, the assembly being either in series and then requiring an axial thrust equilibration drum, or in parallel, the flow being divided after expansion in the stage HP into 2 equal flows of opposite axial direction, each one thereafter expanding in a wheel MP, and then in a wheel BP, as permitted by the disposition of two identical groups of wheels MP and BP symmetrically on each side of one central wheel HP, thereby cancelling all axial thrust, the bleeding of steam during expansion being achieved through the holes (57) provided in a thermodynamically suitable point issuing in a concentric annular chamber (o) integrated to the apparatus, the condensation water returning to the condenser after contributing to the tightness of the hydraulic joint according to claim 6.

10. Steam prime mover according to claims 1, 2, 3, 4, 5, 6 and 9, with internal engine-reducing valve assembly forming a monobloc turbo-engine, characterized in that the high pressure steam is supplied through the central shaft vertically to the wheel HP (53) so that the turbo-engine assembly contained in the « bell » (51) is sustained by the pressure, the support of the shaft being achieved by interposition of a cushion of steam to avoid any mechanical friction.

11. Steam prime mover according to claims 1, 2, 3, 4, 5, 6, 7, 8, 9 and 10, characterized in that, for safety reasons (on starting or in case of failure of steam pressure), the turbine, besides being supported by a cushion of steam, is also supported by extra bearings (52) lubricated by the water under high pressure coming from the boiler supply circuit, the role of which is also to limit the temperatures in the region in question while contributing to the working of the tightness device around the shaft, without any risks of unwanted deposits, said water being always completely demineralized since being chemically pure condensation water resulting from the combustion.

**Patentansprüche**

1. Wärmemaschine mit externer Verbrennung eines Kohlenwasserstoffs, ausschließlich zusammengesetzt aus C und H, unter Verwendung von Wasserdampf nach dem Rankine-Hirn-Zyklus mit Hochdruck, Überhitzung und Entnahme, welche zur Ausrüstung eines autonomen U-Boots, das neben dem Brennstoff den Sauerstoff für die Verbrennung einschließt und die Verbrennungsrückstände ($CO_2$ und Wasser) an Bord aufbewahren muß, ausgelegt ist, dadurch gekennzeichnet, daß sie durch eine Dampfgenerator-Kondensator-Monoblockgruppe mit eingebauter Turbine und Geschwindigkeits-Reduzierstation (22) gebildet ist, umfassend einen Dampfkessel (b) mit Sofortverdampfung mittels umlaufender Heizflächen, der entweder in einen Außen-Kolbenmotor-Druckminderer, gefolgt von einer im Kondensator (c) angeordneten Turbine (20) oder in einen Innen-Motor-Druckminderer mit Mehrfachturbine, deren letzte Entspannungsstufe sich ebenfalls im Kondensator (c) befindet, eine bestimmte Menge liefert, wobei die Abtriebswelle der Reduzierstation der Turbine in den beiden Fällen den Rotationsantrieb der Heizflächen des Dampfkessels, seiner Speise- und Umlaufpumpen (m, i), der Pumpen des Kondensators (k, l, x) sowie der Hilfsmaschinen (y, z) eines Systems zur Aufnahme von Verbrennungsrückständen, bestehend aus einem Durchblastopf (d), in dem das in diesen Rückständen enthaltene Wasser in jenes im Kreislauf kondensiert und wo das $CO_2$ vom Mehrstufen-Kompressor (y) angesaugt wird, sichert, wobei die Gruppe mit einem Wärmerückgewinnungssystem zum Aufheizen des Speisewassers des Dampfkessels in drei Stufen verbunden ist, von denen die erste durch die Wärmeentnahme an der Außenhülle des Dampfkessels (b) und an den Gasen im Durchblastopf (d) mittels des von der Pumpe (i) sichergestellten Kreislaufs gebildet ist, der temperaturmäßig auf etwa 90 °C mit dem Thermostat (t) gesteuert ist, über welchen er dann zum Expansionsgefäß (f) weitergeht, welches als Speisewasserbehälter dient und mit dem Kühler (e) kommuniziert, der von dem vom Kondensator kommenden Kreislaufwasser, wenn notwendig, zum Entfernen der Überschußwärme durchströmt wird, und wo sich auch der Ansaugkasten für rückgewonnenes Überschußwasser (h) mit einem Ölabscheider-Extraktor (s, g, wenn der Motor-Minderer eine Kolbenmaschine ist), die Rohrleitung zum Rückführen des Gases des Behälters (u) sowie die Ansaugung der Speisepumpe (m), die zu der aus Ölkühler (q) und Entnahme-Erhitzer (o) gebildeten zweiten bzw. dritten Aufheizstufe fördert, befinden, während sich das Äquivalent an erzeugtem Wasser, das von der Pumpe (z) im Kasten (h) aufgesaugt wird, in einem Raum des Rumpfs des U-Boots sammelt, dessen Wände in Kontakt mit dem Außenmeerwasser stehen, damit es dort abgekühlt wird und als Kondensator-Umlaufwasser (kalte Quelle) dienen kann zur Verhinderung der gewaltigen Druckspannungen, denen ein direkter Kühlkreis mit Meerwasser großer Tiefe ausgesetzt ist, wobei die Maschine schließlich die Lagerung der $CO_2$-Verbrennungsrückstände in flüssiger Phase an Bord ermöglicht, welches $CO_2$ vom Kompressor (y) komprimiert und zur Verflüssigung mittels der von der Entspannung des unter Hochdruck gelagerten Brenngases und Verbrennungssauerstoffs kommenden Kälte gekühlt wird und dann flüssig an Stelle des Sauerstoffs in eigene Lagerflaschen je nach Verbrauch gefördert wird.

2. Wärmemaschine nach Anspruch 1, umfassend einen Dampfkessel mit umlaufenden Heizflächen (in erster Linie zur Erzielung von hohen Relativgeschwindigkeiten dieser Heizflächen in bezug auf die heißen Verbrennungsgase, die für eine optimale Wärmeübertragung notwendig sind ; an zweiter Stelle zum Zentrifugieren der Gase), gekennzeichnet durch den sternförmigen Einbau von Wasseraufheizrohren (4) und Dampfüberhitzungsrohren (11) in der Nabe einer Drehwelle (3), in welcher axiale Kanäle zur Speisung mit Wasser und zur Entnahme des erzeugten Dampfes vorgesehen sind ; welche Gruppe ein Heizrad mit zwei Hohlfelgen (7) bildet, die die abgeflachten und ausgerichteten, entlang der Erzeugenden eines Zylinders angeordneten und bei der Rotation dieses Rades im Inneren der Verbrennungskammer (1) als Gas-Impulsgeber dienenden Verdampferrohre (8) tragen, wobei das ganze konzentrisch in einer mit Speisewasser gekühlten Doppelhülle (13) montiert ist, die stirnseitig Dichtungseinrichtungen (43, 44) zu den Durchtritten der Welle (3), Stützlager und den (oder) die Brenner trägt.

3. Wärmemaschine nach Anspruch 1, umfassend einen Dreh-Dampfkessel nach Anspruch 2, gekennzeichnet durch die Anordnung seiner Verbrennungskammer (1) in Form eines mit dem Heizrad (2) konzentrischen Doppeltorus mit einer Wand aus feuerfestem Stahlblech, welches gleichzeitig einen Strahlen-Schirm-Separator und -Reflektor (14) bildet, der lokal perforiert oder geschlitzt (15) ist, im Abstand von und an einigen Punkten der gekühlten Außenhülle mit Doppelwand (13) aufgehängt ist, die so konzipiert ist, daß sie einer Verbrennung unter Druck standhält.

4. Wärmemaschine nach Anspruch 1 mit Drehdampfkessel nach Anspruch 2 und 3, gekennzeichnet durch das Versetzen der Verbrennungsgase in Rotation, wodurch die Trennung des $CO_2$ vom möglichen CO und vom Wasserdampf aufgrund unterschiedlicher Dichte veranlaßt wird, was die Reduktion des möglichen CO durch Wasserdampf begünstigt, wodurch schließlich das End-$CO_2$ mit dem verbleibenden Wasserdampf durch Austrittslöcher und -schlitze (15) und danach in einen im Kühlkreis des Dampfkessels inkorporierten Durchblastopf geleitet wird, wo die Kondensation des erzeugten Wassers und die Aufnahme des $CO_2$ durch den Kompressor (y) erfolgt.

5. Wärmemaschine mit Dampf nach den Ansprüchen 1, 2, 3 und 4 unter Verwendung eines oder mehrerer Turbinenräder, wobei jedes dieser Räder dadurch gekennzeichnet ist, daß es vom Typ « mit reiner Reaktion » mit Düsen « variabler Geometrie » ist und durch zwei eine entsprechend einem begrenzten Bogen frei rotierende Muffe (26) umgebende Scheiben (24 und 25) gebildet ist, wobei eine der Scheiben und die Muffe die Außen- bzw. Innenprofile der Düsen tragen, sodaß die Relativposition dieser Stücke (24/25 und 26) die Form des Entspannungsstutzens und seines Durchtrittsquerschnitts im Hals bestimmt, welche Position mittels eines Zentrifugenreglators erzielt und gesteuert wird, der in der Turbine selbst angeordnet und außerdem ein Schleuderdrehzahlbegrenzer ist, gekennzeichnet durch in der Scheibe (24) und in der Muffe (26) vorgesehene Führungsrillen, die zu beiden Seiten der radialen Richtung der Zentrifugalkraft gerichtet sind und in welchen sich die Massen dieses Reglators bildende Zylinderrollen (m) bewegen können und so unter der Wirkung der Zentrifugalkraft die Düsen zu schließen tendieren, während der (vom Zentrum oder von der Seite des Turbinenrades eingelassene) Dampf, der die antagonistische Feder dazu darstellt, diese öffnen will ; wobei ein einziger Regulator im Falle einer Mehrfachturbine mehrere Räder ansteuert.

6. Wärmemaschine mit Dampf nach den Ansprüchen 1, 2, 3, 4 und 5 unter Verwendung von Wasser im geschlossenen Kreislauf als Wärmeträgerfluid mit einem Kondensator (c), dadurch gekennzeichnet, daß er als Gehäuse für die die letzte Entspannungsstufe des Außen-Motor-Minderers bildende Turbine (20) oder für den Mehrfachturbinenaufbau (Innen-Motor-Minderer) dient, welcher Kondensator zylindrisch mit einem rohrförmigen Austauscherbündel über eine feststehende Oberfläche (28) in Form einer Käfigwicklung ist, mit ringförmigen Sammelkästen (35) und (36), die vom Wasser eines indirekten Kühlkreises zum Austausch der Wärme durch den Rumpf des U-Boots durchströmt sind, welches Wasser jenes ist, das in steigender Menge von der Verbrennung kommt, aufgenommen und an Bord in dem Abteil gelagert ist, wo dieser Wärmeaustausch über die Wand mit dem Außenmeerwasser erfolgt, wobei die Dichtheit beim Durchtritt dieser sich drehenden Stücke, Welle und Turbinentrommel dieses unter Vakuum funktionierenden Kondensators durch eine Hydraulikdichtung (31) erzielt wird, die die Zentrifugalkraft ausnützt, welche auf das zur Bildung einer Sperre an Wände gedrückte Wasser wirkt, wobei dieses Wasser aus der Rückgewinnung von Leckverlusten (31) an den Speise-Dichtkästen (43) oder vom Kondensat des Speisewasser-Aufheizers durch Entnahme (o) kommt.

7. Wärmemaschine mit Dampf nach den Ansprüchen 1, 2, 3, 4, 5 und 6, dadurch gekennzeichnet, daß als Außen-Motor-Minderer ein volumetrischer Kolbenmotor (a) verwendet wird, in welchem der größte Teil der Dampfentspannung vorgenommen wird, während sich der verbleibende Teil in der im Generator-Kondensator-Monoblock eingebauten Turbine (20) entspannt, welcher Kolbenmotor wiederum aus irgendeinem bestehenden Dieselmotor konstruiert ist, wobei der gesamte unterhalb der ursprünglichen Zylinderköpfe befindliche mechanische Teil wiederverwendet wird, einschließlich der Einspritzpumpe (46) zur Steuerung der Ventile (39), die von einem Planetengetriebezug (47), der die Umschaltung und Inbetriebsetzung durch Betätigung der Steuer-Endlosschraube (48) gewährleistet, angetrieben ist.

8. Wärmemaschine mit Dampf nach den Ansprüchen 1, 2, 3, 4, 5, 6 und 7 unter Verwendung des Kolbenmotors nach Anspruch 7 als Außen-Motor-Minderer, dadurch gekennzeichnet, daß bei der Innenschmierungseinrichtung der Zylinder dieses Kolbenmotors die Ölverluste an den Ventilführungen (39) ausgenützt werden, wobei ein Ölrückführungskreis der hydraulischen Öffnungssteuerung zum Bespülen der Führungen und zur Bildung eines Dosiermittels abgezweigt ist.

9. Wärmemaschine nach Anspruch 1, 2, 3, 4 und 6 unter Verwendung einer Gruppe von Entspannungsturbinen als Innen-Motor-Minderer, gekennzeichnet durch einen Satz Antriebsräder nach Anspruch 5, die in einer « Glocke » (51) vereinigt sind, die den Dampf zu den verschiedenen Entspannungsstufen leitet, wobei die Anordnung in Serie mit erforderlicher Trommel zum Ausgleich des Axialschubs oder parallel sein kann, wobei sich der Fluß nach der Entspannung in der HP-Stufe in zwei gleichartige Ströme von entgegengesetzter axialer Richtung teilt, wobei sich danach jeder in einem Rad MP und dann in einem Rad BP entspannt, wie es die Anordnung von zwei identischen Gruppen von Rädern MP und BP symmetrisch auf jeder Seite eines einzigen zentralen Rades HP gestattet, und jeden Axialschub annuliert, wobei der Dampfentzug während des Entspannens über Löcher (57) erfolgt, die an einer thermodynamisch geeigneten, in eine konzentrische und im Apparat eingebaute Ringkammer (o) einmündenden Stelle vorgesehen sind, wobei das Kondensat zum Kondensator zurückkehrt, nachdem es zur Abdichtung der Hydraulikdichtung nach Anspruch 6 beigetragen hat.

10. Wärmemaschine mit Dampf nach den Ansprüchen 1, 2, 3, 4, 5, 6 und 9 mit einen Monoblock-Turbomotor bildendem Innen-Motor-Minderer, dadurch gekennzeichnet, daß die Speisung mit Hochdruckdampf über die zentrale Welle an der Stelle des Rades HP (53) erfolgt, sodaß die in der « Glocke » (51) enthaltene Antriebsturbinengruppe vom Druck einen Auftrieb bekommt, wobei die Abstützung über die Welle unter Zwischenschaltung eines Dampfkissens, das jegliche mechanische Reibung vermeidet, erfolgt.

11. Wärmemaschine mit Dampf nach den Ansprüchen 1, 2, 3, 4, 5, 6, 7, 8, 9 und 10, dadurch gekennzeichnet, daß die Turbine aus Sicherheit (bei Inbetriebnahme oder bei Abfall des Dampfdrucks) neben der Unterstützung durch das Dampfkissen auf zusätzlichen Lagern (52) aufliegt, die mit vom Speisekreis des Dampfkessels abgeleitetem Hochdruckwasser geschmiert sind, dessen Aufgabe auch die Temperaturbeschränkung im betreffenden Bereich ist, wobei es aber auch zur Funktion der Dichtungseinrichtungen rund um die Welle unter Vermeidung von störenden Ablagerungen beiträgt, wobei dieses Wasser immer vollkommen entsalzt bleibt, weil es sich um ein von der Verbrennung kommendes chemisch reines Wasserkondensat handelt.

Fig. 1

Coupe
ei ojc

26

R

Fig.2

Coupe 0a

25

Fig.3

Coupe 0d

a

b

c

d

M

e

g

24

Coupe ab

Sortie

ENTREE
B.P.

1/2 Coupe   1/2 Coupe
   0ef         0eg

R

Fig 4

2

Fig. 5

Fig. 6

...

Fig. 7

Fig. 8

Fig. 9

Coupe cj

Fig 10

Coupe oa

H.P.

Coupe ob

26   25   24

M

Fig.11

Coupe od

M

½ Coupe oef

½ Coupe oeg.

a

b

f

i

c

d

M

e

j   g

h

Fig 12

R

R

Coupe ih

8

Fig. 13

Fig. 14